Europäisches Patentamt

European Patent Office

Office européen des brevets

(19)

(11)  **EP 1 169 355 B1**

(12)  **FASCICULE DE BREVET EUROPEEN**

(45) Date de publication et mention
de la délivrance du brevet:
**03.08.2005  Bulletin 2005/31**

(51) Int Cl.⁷: **C08F 2/06**, C08F 2/12,
C08F 220/10

(21) Numéro de dépôt: **00914246.4**

(22) Date de dépôt: **24.03.2000**

(86) Numéro de dépôt international:
**PCT/FR2000/000740**

(87) Numéro de publication internationale:
**WO 2000/059952 (12.10.2000 Gazette 2000/41)**

(54) **MICROPARTICULES ACRYLIQUES RETICULEES, PROCEDE DE PREPARATION ET APPLICATIONS DANS LES REVETEMENTS ET PRODUITS DE MOULAGE**

**VERNETZTE ACRYLAT-MIKROPARTIKEL, VERFAHREN ZU DEREN HERSTELLUNG UND DEREN VERWENDUNG IN BESCHICHTUNGSMASSEN UND FORMMASSEN**

**CROSS-LINKED ACRYLIC MICROPARTICLES, METHOD FOR THE PRODUCTION THEREOF AND USE THEREOF IN COVERINGS AND MOULDING PRODUCTS**

(84) Etats contractants désignés:
**AT BE CH CY DE DK ES FI FR GB GR IE IT LI LU MC NL PT SE**

(30) Priorité: **31.03.1999  FR 9904042**

(43) Date de publication de la demande:
**09.01.2002  Bulletin 2002/02**

(73) Titulaire: **CRAY VALLEY SA**
**92400 Courbevoie (FR)**

(72) Inventeurs:
• **PASCAULT, Jean-Pierre**
**F-69900 Villeurbanne (FR)**
• **VALETTE, Ludovic**
**F-67500 Haguenau (FR)**
• **BARBEAU, Philippe**
**F-60100 Creil (FR)**
• **MAGNY, Benoit**
**F-60550 Verneuil en Halatte (FR)**

(74) Mandataire: **Killis, Andréas**
**Cray Valley**
**Patents Department**
**Centre De Recherche De L'Oise. BP 22**
**60550 Verneuil en Halatte (FR)**

(56) Documents cités:
**GB-A- 2 178 048**

• **CHEMICAL ABSTRACTS, vol. 105, no. 4, 28 juillet 1986 (1986-07-28) Columbus, Ohio, US; abstract no. 25184, "NONAQUEOUS RESIN DISPERSIONS" page 41; colonne 1; XP002123686 & JP 60 226513 A (RICOH CO. LTD.)**
• **CHEMICAL ABSTRACTS, vol. 95, no. 22, 30 novembre 1981 (1981-11-30) Columbus, Ohio, US; abstract no. 188086, "NONAQUEOUS EMULSIONS OF ACRYLIC POLYMERS" page 32; colonne 1; XP002123687 & JP 08 179111 A (RICOH CO. LTD.)**

**Description**

Cette invention concerne des microparticules acryliques réticulées de composition particulière, un procédé de préparation par polymérisation en dispersion en milieu non aqueux en l'absence de polymère stabilisant et des applications dans des compositions de revêtement ou de moulage comme composant réactif ou non réactif permettant par sa présence des performances améliorées en termes de compromis entre dureté, flexibilité et adhérence sur divers substrats, sans affecter négativement les autres performances essentielles des revêtements ou des produits de moulage concernés ni la mise en oeuvre de ceux-ci.

Ces microparticules et les compositions les contenant peuvent être utilisées dans divers domaines d'applications tels que : les vernis de protection, les peintures, les adhésifs, les encres, les poudres à mouler, les produits de moulage chargés ou non, les composites qui nécessitent des performances significativement améliorées à la fois en dureté, flexibilité et adhérence sur substrats divers.

Le compromis de propriété d'usage pour un matériau, que ce soit un revêtement ou un produit de moulage ou un composite, est toujours difficile à obtenir, et en particulier un bon compromis dureté / flexibilité /adhérence.

Une méthode connue afin d'améliorer le compromis dureté /flexibilité est d'incorporer dans une matrice dure un additif plus mou ou inversement. Par exemple, le renforcement des matrices fragiles de type époxy/amine peut être effectué par addition de thermoplastiques ou de particules élastomères de type core/shell comme décrit dans « Toughened Plastics » Adv. Chem. Series, n° 252 (1996) Ed. CK. Riew et AJ Kinlock, Am. Chem. Soc., Washington DC. L'inconvénient majeur de cette solution est une augmentation très importante de la viscosité des formulations, ce qui pose des problèmes de moulage ou d'application comme revêtement.

Dans le cas des revêtements, afin d'augmenter la dureté, il est courant d'incorporer dans la formulation des agents de réticulation multifonctionnels pour augmenter la densité de réticulation du film. L'addition de ces agents entraîne une augmentation des contraintes internes et de l'hétérogénéité de la matrice (Macromol. Chem. Phys., 1998, 1043-1049) et, par conséquent, une diminution de la flexibilité et de l'adhérence du revêtement. L'utilisation de microparticules dans des revêtements est déjà décrite dans Prog. Org. Coat., 15, 1988, 373 pour améliorer les propriétés mécaniques du revêtement. Cependant, l'augmentation de la contrainte à la rupture se fait aux dépens de la flexibilité du matériau. D'autre part, aucun effet sur l'adhérence n'est décrit.

En effet, l'adhérence est également une propriété clé pour les revêtements et pour les compositions de moulage renforcées avec des charges. Une description générale du phénomène d'adhésion est donnée dans le Handbook of Adhesion (D.E. Packham, Longman Scientific & Technical, 1992). L'adhérence dépend d'une part des interactions entre le substrat et les molécules du revêtement, et d'autre part, des propriétés mécaniques du revêtement. Généralement, dans une série homologue en composition chimique, un revêtement plus dur entraînera une moins bonne adhérence. Des exemples d'évolution des propriétés d'adhérence en fonction des propriétés viscoélastiques dans le domaine des revêtements photoréticulables sont données dans la publication de Proceedings of 3rd Nurnberg Congress, European Coatings Show, paper n° 3, March 1995.

Le principal inconvénient des systèmes décrits dans la littérature est qu'il n'est pas possible d'augmenter en même temps deux propriétés telles que la flexibilité et la dureté. D'autre part, l'adhérence du système généralement diminue quand la dureté du matériau augmente.

La présente invention remédie aux limitations et inconvénients de l'art antérieur et permet d'augmenter la dureté des matériaux, tels que revêtements ou produits de moulage ou composites, par l'ajout de microparticules réticulées spécifiques tout en conservant, ou éventuellement en améliorant, le niveau de flexibilité du matériau tout en améliorant l'adhérence du matériau sur un substrat, et plus particulièrement sur substrats difficiles, tels que les polyoléfines et plus particulièrement le polyéthylène ou le polypropylène et les copolymères éthylène-propylène. Un autre avantage des microparticules de l'invention est leur excellente compatibilité, permettant ainsi une incorporation à des taux élevés, sans problème de compatibilité et sans effet négatif sur la rhéologie des compositions concernées et les conditions d'application, soit des compositions de revêtement soit des compositions de moulage.

Plus particulièrement, la présente invention permet l'obtention de revêtements ayant une dureté et une flexibilité améliorée avec une très bonne adhérence sur substrats polaires ou non polaires et plus particulièrement de revêtements en couche mince inférieure à 100 μm et de préférence inférieure à 50 μm sur substrats à adhérence difficile tels que les polyoléfines en général et plus particulièrement, le polyéthylène et le polypropylène, sans traitement de surface. En effet, ceci est permis grâce à la présence dans ces compositions de microparticules acryliques réticulées nouvelles, de composition et structure essentielles spécifiques et de taille entre 10 et 300 nm, adaptables à chaque application.

Un premier objet de l'invention concerne des microparticules réticulées de taille entre 10 et 300 nm, obtenues par polymérisation d'une composition de composés polymérisables éthyléniquement insaturés, caractérisées en ce que la composition des polymérisables comprend :

-   un premier composant A représentant de 50 à 99% en moles de ladite composition et constitué d'isobornyl (méth)acrylate et/ou de norbornyl (méth)acrylate et/ou cyclohexyl (méth)acrylate et optionnellement en combinaison avec un alkyl (méth)acrylate en $C_2$-$C_8$ et/ou méthacrylate de Cardura E10

- un deuxième composant B constitué d'au moins un monomère ou oligomère comportant au moins deux insaturations éthyléniques polymérisables par voie radicalaire
- un troisième composant C constitué d'au moins un monomère ou oligomère comportant en plus d'une insaturation éthylénique polymérisable par voie radicalaire au moins une deuxième fonction réactive f1 différente de l'insaturation éthylénique,

avec la possibilité de modification chimique au moins partielle des fonctions initiales f1 en fonctions finales f2 sous condition que les fonctions f1 sélectionnées ne réagissent pas entre elles lors de la polymérisation, et que la somme des composants A, B, C est égale à 100%. Le terme « (méth)acrylate » est à interpréter partout comme acrylate et/ou méthacrylate.

La taille préférée de ces microparticules est de 10 à 200 nm et plus particulièrement de 20 à 100 nm. Elles peuvent être obtenues d'une manière générale par polymérisation radicalaire en émulsion en milieu aqueux ou par polymérisation en dispersion en milieu non aqueux de ladite composition de composés polymérisables. En milieu aqueux, il y a présence d'un émulsifiant et en milieu non aqueux, présence d'un polymère stabilisant selon les techniques courantes connues par l'homme du métier et décrites dans la littérature comme dans Advances in Polymer Science (1998), vol. 136, p. 139-234. La spécificité de ces microparticules est liée à leur composition.

Le composant A peut être constitué d'un monomère ou du mélange de monomères choisi parmi les (méth)acrylates de: isobornyle, norbornyle, cyclohexyle en combinaison possible avec un (méth)acrylate d'alkyle en $C_2$-$C_8$ et/ou (méth)acrylate de Cardura E10. Le (méth)acrylate d'alkyle en $C_2$-$C_8$ peut représenter de 0 à 30% en moles du composant A. Dans le cas de mélange (méth)acrylates d'isobornyle, de norbornyle, de cyclohexyle, le (méth)acrylate d'isobornyle représente de préférence au moins 50% en moles du composant A.

Le composant A préféré est le (méth)acrylate d'isobornyle avec une proportion préférée dans la composition des polymérisables entre 60 et 90% en moles. Les (méth)acrylates d'alkyle en $C_2$-$C_8$ sont choisis de préférence parmi les (méth)acrylates de : éthyle, propyle, n-butyle, tertio butyle, éthyl-2 hexyle et/ou (méth)acrylate de Cardura E10.

Le composant B est constitué d'un monomère ou d'un oligomère ou d'un mélange de monomères ou d'oligomères ou d'un mélange de monomères et d'oligomères choisis parmi :

- les di(méth)acrylates d'éthylène glycol, de propylène glycol, de butane diol, de méthyl-2 propane diol, de néopentyl glycol, d'hexane diol, de zinc et/ou de calcium, les tri(méth)acrylates de glycérol, de triméthylol propane et/ou des dérivés alkoxylés, les tri ou tetra(méth)acrylates de pentaérythritol et les penta ou hexa(méth)acrylates de dipentaérythritol, oligomères de diols de polyéthers, polyesters, polyuréthanes de Mn inférieure à 2500;
- les divinyl benzènes substitués ou non substitués
- les oligomères polyesters insaturés ou acryliques acrylés de Mn inférieure à 2500 ayant un nombre d'insaturations éthyléniques par mole de 2 à 50 et de préférence de 2 à 20

avec les proportions du composant B dans la composition des composés polymérisables variant de préférence de 0,5 à 10% en moles.

Le composant C est un agent de fonctionnalisation des microparticules de l'invention. Les fonctions f1 apportées par le composant C peuvent être identiques ou différentes suivant que le composant C comprend un ou plusieurs monomères et/ou oligomères de fonctions f1 identiques ou différentes, avec la condition que dans le cas où les fonctions f1 sont différentes, elles ne réagissent pas entre elles lors de la polymérisation. Les fonctions f1 sont de préférence sélectionnées parmi les fonctions : époxy, hydroxy, carboxy, anhydride carboxylique, isocyanate, silane, amine ou oxazoline.

Le composant C est présent de préférence à un taux molaire d'au plus 49,5% par rapport à la composition des composés polymérisables A, B, C et est constitué d'au moins un monomère et/ou oligomère sélectionné parmi :

- l'acide (méth)acrylique, l'acide maléique, fumarique ou itaconique pour f1 étant une fonction carboxy
- l'anhydride maléique, l'anhydride itaconique, pour f1 étant une fonction anhydride carboxylique
- les hydroxy alkyl (méth)acrylates avec un alkyl en $C_2$-$C_6$ ou les mono(méth)acrylates d'oligomères polyéther- ou polyester- ou polyuréthane- diols ou de polycaprolactone de Mn inférieure à 1500, pour f1 étant une fonction hydroxy
- le (méth)acrylate de glycidyle, les (méth)acrylates de dérivés époxydés de dicyclopentadiène ou les (méth)acrylates de vinyl norbornène époxydés ou les (méth)acrylates de glycidyle éther alkoxylés ou les (méth)acrylates de dérivés époxydés de cyclohéxène, pour f1 étant une fonction époxy
- l'isocyanatoéthyl (méth)acrylate et les mono(méth)acrylates uréthanes dérivés de diisocyanates, pour f1 étant une fonction isocyanate

- les (méth)acrylates portant un groupement trialkyl ou trialkoxy silane, pour f1 étant une fonction silane
- le diméthylaminoéthyl (méth)acrylate ou le tertiobutylaminoéthyl (méth)acrylate, pour f1 étant une fonction amine
- le 2-(5-(méth)acryloyl-pentyl)-1,3 oxazoline pour f1 étant une fonction oxazoline

Plus particulièrement, le composant C est présent à un taux molaire de 5 à 30% par rapport à la somme des composés polymérisables A, B, C et il est sélectionné parmi : le (méth)acrylate de glycidyle, les hydroxyalkyl (méth) acrylates en $C_2$-$C_6$, l'acide (méth)acrylique, l'anhydride ou acide maléique, l'anhydride ou acide itaconique, l'isocyanatoéthyl (méth)acrylate, le diméthyl aminoéthyl (méth)acrylate.

Les fonctions f1 apportées par le composant C peuvent être au moins partiellement modifiées chimiquement pour conduire à la présence de fonctions f2 modifiées issues des fonctions f1, les fonctions f2 étant choisies de préférence parmi : les (méth)acrylates, les vinyles, les maléates, les fumarates, les itaconates, les esters d'alcool allylique, les insaturations à base de dicyclopentadiène, les esters ou les amides gras insaturés en $C_{12}$-$C_{22}$, les sels d'acide carboxylique ou les sels d'ammonium quaternaire.

Les modifications chimiques des fonctions f1 en fonctions f2 peuvent être réalisées selon les méthodes déjà connues dans la littérature. Par exemple, les fonctions f2 :

- (méth)acrylates à partir des fonctions f1 :

    - époxy par réaction avec l'acide (méth)acrylique
    - carboxy ou anhydride par réaction avec le (méth)acrylate de glycidyle ou hydroxy alkyl (méth)acrylate avec un hydroxy alkyle en $C_2$-$C_6$

- maléates ou itaconates à partir des fonctions f1 époxy ou hydroxy par réaction avec l'anhydride maléique ou itaconique
- sels d'acide carboxylique à partir des fonctions f1 carboxy par neutralisation avec une base telle que la soude, la potasse ou l'ammoniaque ou une amine
- sels d'ammonium quaternaire à partir des fonctions f1 amine tertiaire par réaction avec un acide minéral ou organique
- esters d'alcools allyliques à partir de fonctions f1 anhydride par réaction d'un alcool allylique
- insaturation dicyclopentadiène (DCPD) à partir des fonctions f1 carboxy par réaction d'addition du DCPD
- vinyle à partir des fonctions f1 hydroxy, par réaction avec une vinyl azlactone tel que la 2-vinyl-4,4 diméthylazlactone ou un vinyl isocyanate tel que l'isopropényl diméthyl benzyl isocyanate
- esters ou amides insaturés en $C_{12}$-$C_{22}$ à partir des fonctions f1 anhydride ou carboxy par réaction d'un alcool ou amine gras insaturés en $C_{12}$-$C_{22}$

Une composition particulière préférée des microparticules de l'invention comprend :

- 50 à 95% en moles d'un composant A constitué de (méth)acrylate d'isobornyle et/ou de norbornyle
- 0,5 à 10% en moles d'un composant B tel que défini précédemment
- au plus 49,5% en moles d'un composant C tel que défini précédemment avec la condition supplémentaire que la somme A + B + C = 100% en moles.

Parmi les microparticules préférées portant, au départ, des fonctions f1, nous pouvons citer :

- les microparticules portant des fonctions f1 carboxy ou des fonctions f1 carboxy partiellement ou complètement modifiées en fonctions f2 (méth)acrylates et/ou maléates et/ou fumarates et/ou maléimides et/ou sels d'acide carboxylique
- les microparticules portant des fonctions f1 époxy et/ou hydroxy ou des fonctions f1 époxy et/ou hydroxy partiellement modifiées en fonctions f2 (méth)acrylates et/ou maléates et/ou fumarates et/ou maléimides

Les fonctions (méth)acryliques et/ou maléates et/ou fumarates ont un intérêt dans les compositions réticulables par voie radicalaire : soit par voie de rayonnement UV ou faisceau d'électrons, soit par voie d'un système amorceur radicalaire thermique tels que comprenant un dérivé peroxyde, en présence éventuellement d'un accélérateur de décomposition.

Les fonctions époxy et/ou hydroxy peuvent participer dans des compositions réticulables par voie photochimique en présence de photoamorceur cationique ou par voie de condensation. Les fonctions carboxy ont surtout un intérêt dans des réactions de condensation.

Les sels d'acide carboxyliques ou d'ammonium quaternaire ont un intérêt dans des compositions aqueuses du fait de leurs fonctions hydrodispersibles ou hydrosolubles qui rend les microparticules concernées hydrodispersibles ou hydrosolubles dans une composition d'application à base aqueuse.

La double fonctionnalité f1/f2 comme carboxy/(méth)acrylate ou époxy/(méth)acrylate et/ou maléate et/ou fumarate rend possible l'utilisation de microparticules concernées dans des systèmes réactifs duaux avec un double mécanisme de réticulation par fonction f1 ou f2. Par conséquent, les fonctions f1/f2 de ces microparticules acryliques réticulées sont adaptables en fonction de l'application et de la composition hôte.

Un deuxième objet de cette invention est un procédé spécifique de préparation de microparticules de l'invention qui a l'avantage d'être plus simple et plus pratique par rapport à ceux déjà connus dans l'état de l'art antérieur.

Ce procédé de préparation de microparticules de l'invention comprend une étape de polymérisation par voie radicalaire par dispersion en milieu non aqueux, non solvant du polymère formé, d'une composition de composés polymérisables A, B, C, telle que définie pour les microparticules de l'invention, sans nécessité d'addition de polymère stabilisant pour les microparticules formées, ni avant ni pendant ni après polymérisation, ledit procédé pouvant comprendre le cas échéant une étape supplémentaire de modification chimique au moins partielle des fonctions f1 apportées par le composant C tel que défini dans l'invention.

Cette méthode de préparation évite donc les inconvénients liés à la présence d'un polymère stabilisant :

-    problème de disponibilité du polymère stabilisant et de solubilité dans le milieu de polymérisation
-    effet négatif sur les performances des microparticules en termes de compatibilité ou de réactivité des fonctions réactives

La particularité de ce procédé est liée à la composition spécifique de la composition des composés polymérisables et plus particulièrement à la nature du composant A de l'invention telle que définie précédemment.

Parmi les avantages particuliers des microparticules obtenues par ce procédé spécifique, nous pouvons citer une compatibilité et, suivant le cas, une réactivité nettement améliorées sans limitation de disponibilité ou de caractéristiques du polymère stabilisant.

D'autre part, leur structure particulière, obtenue à travers le procédé spécifique utilisé, confère aux microparticules obtenues un caractère d'autodispersibilité et d'autostabilisation dans un milieu solvant identique ou comparable à celui de la polymérisation. De même, ce procédé permet l'obtention de microparticules réticulées très monodisperses en taille, ce qui est important pour réaliser des performances rhéologiques et viscoélastiques spécifiques dans certaines applications dans le domaine des compositions de revêtements, des compositions de moulage ou des composites.

Le solvant utilisé pour ce procédé est un solvant organique ou un mélange de solvants organiques sélectionnés parmi les alcanes en $C_6$-$C_{10}$ tels que les hexanes, heptanes et plus particulièrement le n-heptane, cyclohexane, octanes, nonanes et/ou les alcanols en $C_3$-$C_5$ tels que l'isopropanol, butanol, pentanol. Les mélanges de solvants non polaires tels que l'heptane avec des solvants polaires tel que l'isopropanol sont préférés pour ajuster le pouvoir solvatant du milieu par rapport aux composés polymérisables d'une part, et d'autre part, le pouvoir non-solvatant du milieu qui devient un milieu de précipitation par rapport au polymère formé. Le rapport pondéral entre alcane en $C_6$-$C_{10}$ et alcanol en $C_3$-$C_5$ peut varier de 0/100 à 75/25 et plus particulièrement de 25/75 à 50/50. Ceci reste en particulier préféré dans le cas où ce mélange est à base de n-heptane ou de cyclohexane d'une part, et d'isopropanol ou de butanol d'autre part.

Le rapport pondéral entre la somme des composants A, B, C, d'une part et le solvant ou mélange de solvants d'autre part, peut varier de 10/90 à 50/50 et de préférence de 15/85 à 30/70. Ce rapport est un des paramètres du procédé permettant de régler la taille des microparticules. Plus la dilution augmente, plus la taille des microparticules a tendance à diminuer.

La polymérisation en dispersion des composés éthyléniquement insaturés est réalisée par voie radicalaire par l'addition d'un amorceur radicalaire courant pour ce type de polymérisation, mais adapté au milieu. La température de polymérisation est adaptée à la température de décomposition de l'amorceur radicalaire choisi et à la température d'ébullition du milieu solvant utilisé et pourra varier en général, en fonction de l'amorceur et du milieu solvant utilisés, de 20°C à 150°C. Comme exemple d'amorceur nous pouvons citer : les dérivés azo tels que l'azobisisobutyronitrile (AIBN) et dérivés, les peroxydes et hydroperoxydes ou tout autre système d'amorçage soluble dans le milieu de polymérisation et connus par l'homme du métier. Plus particulièrement, ces amorceurs peuvent être fonctionnalisés avec une fonction réactive f3 telle que hydroxy ou carboxy, comme par exemple des dérivés azo hydroxylés ou carboxylés. Dans ce cas les microparticules obtenues seront au moins partiellement fonctionnalisées par les fonctions f3. D'autre part, d'autres amorceurs radicalaires peuvent être utilisés permettant une polymérisation radicalaire dite « contrôlée » ou « vivante » tels que décrits dans Comprehensive Polymer Science, Vol 3, p. 141-146, Pergamon, London, 1989. De même des agents de transfert de chaîne tels que des mercaptans peuvent être associés à l'amorceur pour mieux contrôler les masses moléculaires. La durée de polymérisation dépendra de la nature et du taux d'amorceur et de la température de polymérisation. Le taux d'amorceur usuel peut varier de 0,05 à 5% en poids par rapport à la somme des composants polymérisables A, B, C.

Selon un premier mode de réalisation de ce procédé en batch, la totalité des composants polymérisables A, B, C est additionnée sous agitation dès le départ dans le réacteur contenant la totalité du solvant et maintenu à la température de polymérisation. Les monomères peuvent aussi être additionnés sous forme de solution dans une partie du solvant de polymérisation. L'amorçage de la polymérisation se fait sous agitation par addition progressive de l'amorceur radicalaire choisi, soluble dans le milieu de polymérisation. Après la fin de l'addition de l'amorceur, la polymérisation se poursuit pendant une durée qui peut varier de 1 h à 8 h suivant la température, la nature et le taux de l'amorceur, la nature et la concentration globale en composés polymérisables. Les microparticules formées autostabilisées dans le milieu de polymérisation peuvent être récupérées soit par précipitation, par addition d'un non solvant tel qu'un alcool en proportion allant de 2/1 à 5/1 en poids par rapport à la dispersion, précipitation suivie de filtration et de séchage, soit par une étape unique d'évaporation du milieu solvant de dispersion, de préférence sous pression réduite de 10 à 30 mbars.

La taille finale des microparticules obtenues varie de 10 à 300 nm et de préférence entre 10 et 200 nm et plus particulièrement de 20 à 100 nm en fonction de la dilution des composés polymérisables et du rapport molaire du composant A. Pour diminuer la taille des microparticules, on peut augmenter le taux du composant A ou augmenter le taux de dilution des composés polymérisables et/ou augmenter le pouvoir précipitant du milieu de polymérisation en ajustant la nature et/ou la composition du milieu solvant de polymérisation. L'avantage essentiel de ce procédé et de ses différents modes de réalisation est sa simplicité et sa flexibilité dans la préparation d'une variété importante de structures de microparticules, en faisant simplement varier la nature et les proportions des composants A, B, C, dans les limites précédemment définies de l'invention.

Selon un deuxième mode de réalisation de ce procédé, celui-ci comprend une ou plusieurs étapes successives de polymérisation continues et/ou discontinues caractérisées respectivement par une addition de composés polymérisables respectivement en continu ou en une seule fois par étape concernée. Dans le cas où le procédé comporte plus d'une étape de polymérisation discontinue et/ou continue, la composition des polymérisables peut être identique ou différente d'une étape à l'autre. Ainsi, il est possible de réaliser des structures de microparticules très particulières de type multicouches en fonction de la composition des polymérisables de chaque étape et l'ordre chronologique de chaque étape continue ou discontinue.

Dans le cas où la composition des polymérisables comporte un composant C comportant des fonctions f1, le procédé tel que décrit précédemment peut comprendre après l'étape de polymérisation une étape supplémentaire de modification chimique de la fonction f1 et/ou de la fonction f2 issue de f1. Cette étape de modification chimique peut avoir lieu, suivant les cas, soit avant la récupération des microparticules par évaporation du solvant de polymérisation, soit après récupération de ces microparticules, auquel cas la modification chimique peut avoir lieu, suivant le cas, soit en masse si la viscosité le permet à la température de la modification, soit en solution dans un solvant différent de celui de la polymérisation si celui-ci ne convient pas, en ce qui concerne sa température d'ébullition ou son inertie chimique. Comme exemple préféré de modification chimique, nous pouvons citer la (méth)acrylation de fonctions réactives telles que : époxy et hydroxy par l'acide (méth)acrylique ou l'anhydride ou acide maléique ou acide fumarique ou itaconique ou acide ou anhydride carboxylique par le (méth)acrylate de glycidyle ou l'hydroxyéthyl-(méth)acrylate. Par exemple, la (méth)acrylation peut avoir lieu en solution contenant environ 30 - 60% de microparticules dispersées, en présence de catalyseurs d'estérification tels que le Cr (III) diisopropyl salicylate, l'éthyl hexanoate de Cr (III), le bromure d'éthyletriphényl- phosphonium, des amines tertiaires.

Une variante de ce procédé peut comprendre avant l'étape de polymérisation, une étape de dispersion dans le milieu non aqueux de microparticules organiques ou minérales insolubles dans ce milieu, suivie d'une étape de polymérisation telle que décrite précédemment. Dans ce cas, les microparticules organiques ou minérales en dispersion ont des tailles adaptées à celle des microparticules finales à obtenir. Les microparticules prédispersées peuvent être choisies parmi les pigments organiques ou minéraux ou charges ou additifs organiques ou minéraux ou des microparticules de l'invention, préalablement préparées et insolubles dans le milieu de dispersion. Cette variante de procédé permet un enrobage ou une encapsulation au moins partielle mais simple et pratique des microparticules prédispersées dans le but, par exemple, d'améliorer leur dispersibilité dans d'autres milieux de dispersion (aqueux ou organiques) ou d'améliorer leur compatibilité dans des matrices d'accueil pour des compositions de revêtements, de moulage ou de composites.

Un troisième objet de l'invention concerne des compositions de revêtement ou de moulage ou de composites, comprenant des microparticules de l'invention, telles que définies précédemment.

Ces compositions sont réticulables ou non réticulables mais de préférence elles sont réticulables :

- soit par le fait de la présence des microparticules de l'invention portant des fonctions réactives f1 et/ou f2 telles que décrites précédemment
- soit, indépendamment de la présence de fonctions f1 et/ou f2, c'est à dire par les fonctions réactives propres à la composition initiale sans les microparticules
- soit, à la fois par les fonctions réactives propres à la composition initiale et par celles des microparticules

On peut encore distinguer parmi les compositions réticulables, les compositions contenant uniquement, c'est à dire à 100%, ou essentiellement, c'est à dire entre 60 et 90%, des microparticules acryliques réticulées portant des fonctions f1 et/ou f2 identiques ou différentes mais réagissant entre elles pour former au moins un réseau de réticulation constituant la matrice, soit d'un revêtement, soit d'un produit de moulage.

Par exemple, ces compositions peuvent être constituées uniquement ou essentiellement de microparticules acryliques réticulées portant des fonctions f2 (méth)acrylates réticulables radicalairement soit par voie d'un système d'amorçage radicalaire thermique courant, contenant un composé peroxydique et éventuellement un accélérateur de décomposition, soit par voie d'irradiation par un rayonnement tel que UV en présence d'un photoamorceur ou faisceau d'électrons en l'absence de photoamorceur. D'autres exemples illustrant ces compositions peuvent être cités comme des compositions de revêtement ou de moulage constituées uniquement ou essentiellement de microparticules acryliques réticulées portant respectivement des fonctions coréactives f1 époxy et anhydride.

Un autre exemple de telles compositions, en particulier pour les revêtements, est une composition aqueuse de revêtement constituée uniquement ou essentiellement de microparticules acryliques réticulées de l'invention, portant des fonctions f1 et/ou f2 ou comportant une structure spécifique qui les rend hydrosolubles ou hydrodispersibles et ayant des caractéristiques de Tg et de température minimale de filmification qui rend leur coalescence possible entre 0 et 40°C. De telles fonctions f1 et/ou f2 peuvent être, par exemple, des sels d'acide carboxyliques ou des sels d'ammonium et plus particulièrement des sels d'ammonium quaternaire. Comme structure spécifique de microparticules ayant ce caractère hydrosoluble ou hydrodispersible, nous pouvons citer la présence d'oligomères acrylés à base de polyéthers tel que le polyéthylène glycol, de préférence de masse moléculaire moyenne en nombre Mn inférieure à 2500 et de préférence inférieure à 1500.

Dans le cas de compositions de revêtement ou de moulage ou de composite où les microparticules acryliques réticulées de l'invention sont des composants partiels réactifs ou non réactifs en présence d'autres composants réactifs ou non réactifs de la composition, le taux de ces microparticules peut varier de 0,5 à 50% en poids par rapport à la somme des composants organiques de cette composition. En dehors des microparticules de l'invention, ces compositions comprennent un composant de base qui est la matrice organique de base du revêtement ou du produit de moulage et des additifs ou charges usuelles adaptées ou ajustées en fonction de l'application visée et à la portée de l'homme du métier.

En tant qu'additifs réactifs ou non réactifs, les microparticules de l'invention peuvent être utilisées dans des compositions de revêtements ou de moulage réticulables ou non réticulables, d'une manière générale pour:

-   réduire la viscosité de ces compositions en permettant un meilleur mouillage et une meilleure application sur les substrats à revêtir et, d'autre part, des compositions à plus haut extrait sec et par conséquent à plus faible taux de composés organiques volatils
-   mieux contrôler, par application spécifique, la rhéologie de ces compositions par ajustement de la structure des microparticules
-   renforcer ou plastifier la matrice en fonction de la compatibilité, de la fonctionnalité et de la Tg de la microparticule par rapport à la matrice hôte

Les microparticules en tant qu'additifs non réactifs peuvent avoir des fonctions sélectionnées parmi f1, f2, telles que définies dans l'invention précédemment, qui tout en étant chimiquement inertes, vis à vis de la composition hôte, peuvent améliorer sensiblement la compatibilité de la microparticule vis à vis de la matrice hôte par interactions physicochimiques favorables.

Dans le cas de microparticules utilisées comme additifs réactifs, leurs fonctions réactives sont sélectionnées et adaptées ou modifiées pour réagir avec les fonctions réactives de la composition réticulable hôte ou entre elles. Par exemple, dans le cas d'une composition réticulable par voie radicalaire thermique ou photochimique contenant des monomères et/ou oligomères mono- ou multi-fonctionnels éthyléniquement insaturés, les microparticules, après modification chimique suivant l'étape de polymérisation, seront de préférence polyinsaturées. Des microparticules réactives multiépoxydées ou multihydroxylées seront adaptées pour des compositions de revêtements d'époxydes photoréticulables par voie cationique en présence de photoamorceurs cationiques tels que les sels de triaryl sulfonium ou de diaryl iodonium. Des microparticules réactives multiépoxydées ou multicarboxylées seront adaptées pour la réticulation de compositions de revêtement ou de moulage à base d'époxydes et de polyamines ou de copolymères acryliques carboxylés ou d'anhydride de diacide carboxylique.

De même, des microparticules multicarboxylées partiellement neutralisées peuvent servir de microparticules hydrodispersables ou, suivant le degré de neutralisation, hydrosolubles et peuvent être utilisées dans des compositions de revêtements à base de dispersions aqueuses de polymères réactives ou non réactives. Ce caractère d'hydrodispersibilité ou d'hydrosolubilité peut aussi être conféré par un composant C et/ou B ayant des constituants sélectionnés parmi respectivement les mono- et di-(méth)acrylates de polyéthers diols tels que le polyéthylène glycol de $\overline{Mn}$ inférieure à 1500. En particulier des microparticules hydrodispersibles ou hydrosolubles portant des fonctions (méth)acrylates, après modification partielle de leurs fonctions initiales f1, peuvent être utilisées dans des revêtements photoréticulables à base de dispersions aqueuses de polymères, de préférence acryliques. Les microparticules utilisées comme additifs réactifs ont une fonction de véritable agent réticulant et d'activateur de réactivité du système concerné, du fait de leur fonctionnalité élevée.

L'effet sur les performances mécaniques du revêtement ou du produit moulé se traduit, par un renforcement et une flexibilité accrus, en fonction de la fonctionnalité, compatibilité et Tg de la microparticule greffée chimiquement à la matrice hôte, la microparticule se comportant comme une microcharge greffée ou non et/ou une microcharge dure ou flexible. L'énergie de cohésion du matériau final, revêtement ou produit de moulage, se trouve ainsi augmentée avec un effet positif, possible à la fois sur la dureté et la flexibilité.

En plus du compromis dureté/flexibilité, la présence de microparticules de l'invention rend possible une meilleure adhérence des compositions concernées sur des substrats divers polaires ou non polaires. Ces substrats peuvent être des substrats revêtables par des compositions de revêtements ou imprégnables en tant que charges ou renforts dans des compositions de moulage ou de composites.

Comme exemples de substrats polaires sur lesquels les compositions contenant les microparticules de l'invention donnent une bonne adhérence, nous pouvons citer : le verre, l'acier, l'aluminium, le silicium, le polycarbonate, le bois, les fibres de verre, les fibres de carbone, les fibres de polyester ou de polyamide, les fibres de cellulose.

Comme exemples de substrats non polaires réputés difficiles en termes d'adhérence donnant de bonnes performances d'adhérence avec les compositions de revêtement et de préférence avec les compositions de revêtements réticulables par voie radicalaire, nous pouvons citer : les polyoléfines, et plus particulièrement, le polyéthylène et le polypropylène avec ou sans traitement spécial de surface, et les revêtements de faible tension de surface tels que vernis photoréticulés.

Parmi les compositions de revêtement préférées ayant un bon compromis dureté/flexibilité/adhérence sur substrats polaires et non polaires nous pouvons citer une composition réticulable par voie radicalaire contenant de 0,5 à 50% en poids, de préférence, 5 à 30% en poids de microparticules acryliques réticulées de l'invention telles que définies précédemment, de préférence portant des fonctions réactives f2 (méth)acrylates et/ou maléates et/ou maléimides et ladite composition de revêtement comprenant en plus des monomères mono- ou multifonctionnels acryliques ou vinyliques et/ou oligomères acryliques mono ou multifonctionnels ou oligomères polyesters insaturés.

Comme monomères mono- ou multifonctionnels acryliques, peuvent être utilisés les monomères acryliques de fonctionnalité en insaturation (méth)acrylique par molécule allant de 1 à 6. Plus particulièrement, ils peuvent être sélectionnés parmi les monomères suivants et leur mélange : isobornyl (méth)acrylate, isodécyle (méth)acrylate, lauryl (méth)acrylate, 2-2 éthoxy éthoxy éthyl (méth)acrylate, tetrahydrofurfuryl (méth)acrylate, 2 phénoxy éthyl (méth)acrylate, tridécyl (méth)acrylate, (méth)acrylate de nonyl phénol éthoxylé, di(méth)acrylate de néopentylglycol éthoxylé ou propoxylé, di(méth)acrylate de polyéthylène glycol ou polypopropylène glycol, hexane diol di(méth)acrylate, triméthylol propane tri(méth)acrylate éthoxylé et/ou propoxylé.

Dans le cas où des oligomères tels que les polyesters insaturés sont présents dans la composition, des monomères vinyl aromatiques peuvent être utilisés tel que le styrène ou le vinyl toluène ou l'allyl phtalate.

Parmi les oligomères acryliques mono- ou multifonctionnels qui peuvent être présents dans ces compositions, et de préférence avec des monomères acryliques, nous pouvons citer : les oligomères (méth)acrylates de fonctionnalité allant de 1 à 50 choisis parmi : polyéthers (méth)acrylates, polyépoxydes (méth)acrylates, polyesters (méth)acrylates, polyuréthanes (méth)acrylates, polycaprolactone (méth)acrylates ou les copolymères acryliques d'au moins un ester (méth)acrylique avec le (méth)acrylate de glycidyle lesquels copolymères sont ensuite (méth)acrylés au moins partiellement dans une étape séparée. La masse moléculaire moyenne en nombre de ces oligomères ou copolymères reste inférieure à 20 000. Dans un cas plus particulier de composition, les microparticules acryliques réticulées portant des fonctions f2 (méth)acrylates peuvent remplacer complètement le monomère ou oligomère multifonctionnel de fonctionnalité ≥ 2 comme agent réticulant avec des performances de dureté/flexibilité et d'adhérence sur substrat nettement améliorées.

Ces compositions peuvent être réticulées par voie radicalaire :

- soit par voie radicalaire thermique en présence d'un système d'amorçage radicalaire thermique comprenant un dérivé peroxyde, tels qu'un peroxyde ou hydroperoxyde organique courant, en présence éventuellement d'un accélérateur de décomposition tel qu'une amine tertiaire ou des sels de cobalt tel que l'octoate de Co dans des proportions couramment utilisées par l'homme du métier et en général avec un taux de dérivé peroxyde compris entre 0,5 et 6% et un taux d'accélérateur de décomposition entre 0,01 et 2% par rapport à la somme des composants monomères et/ou oligomères, la réticulation pouvant aussi se réaliser à basse température en fonction de la présence ou non d'un accélérateur de décomposition du dérivé peroxyde
- soit par voie de rayonnement, soit UV en présence d'un système photoamorceur couramment utilisé dans des systèmes photoréticulables acryliques, tel que les cétones aromatiques type benzophénone, les $\alpha$-hydroxy cétones, les dérivés $\alpha$-dicarbonyles, les oxydes d'acylphosphines en présence ou non d'amines tertiaires, dans des proportions allant de 0,5 à 10% par rapport à la somme des monomères et/ou oligomères de la composition, soit par faisceau d'électrons en l'absence de photoamorceur.

Plus particulièrement, est préférée une composition réticulable par voie radicalaire destinée à être appliquée ou qui est appliquée sous forme de revêtement sur des substrats polaires ou non polaires tels que définis ci-dessus et qui comprend :

- 0,5 à 50% et de préférence de 5 à 30% en poids de microparticules telles que définies à l'une des revendications 1 à 7 portant des fonctions f2 (méth)acrylates et/ou maléates et/ou fumarates et/ou maléimides et/ou vinyles
- 50 à 95% d'au moins un monomère choisi parmi l'isobornyl (méth)acrylate et/ou l'isodécyl (méth)acrylate, 2-2 éthyl éthoxy éthoxy (méth)acrylate, tridécyl (méth)acrylate, lauryl (méth)acrylate, tetrahydrofurfuryl (méth)acrylate, 2 phénoxy éthyl (méth)acrylate
- 0 à 5% en poids de di(méth)acrylate d'alkylène diol en $C_2$-$C_6$ les pourcentages étant choisis de telle manière que la somme totale des microparticules et monomères soit égale à 100%.

Encore plus préférentiellement, cette composition est réticulable par voie de rayonnement, soit par UV soit par faisceau d'électrons. L'épaisseur préférée des revêtements réticulables par voie radicalaire est inférieure à 100 microns et plus particulièrement inférieure à 50 microns.

Un cas particulier de composition de revêtement réticulable par voie radicalaire est une composition de dispersion aqueuse de polymère réticulable, comprenant des microparticules hydrodispersibles ou hydrosolubles réactives, participant à la réticulation. La dispersion aqueuse de polymère réticulable peut être une émulsion acrylique pouvant déjà contenir un agent réticulant hydrosoluble ou hydrodispersible à base de monomères et/ou oligomères multifonctionnels acryliques de fonctionnalité ≥ 2 hydrodispersibles ou hydrosolubles. Des microparticules de l'invention portant par exemple des fonctions f2 (méth)acrylates peuvent remplacer en partie ou complètement un tel agent réticulant acrylique multifonctionnel hydrodispersible ou hydrosoluble. L'hydrodispersibilité ou hydrosolubilité de telles microparticules est assurée, dans un tel cas, par des fonctions f1 et/ou f2 hydrosolubles telles que les sels d'acide carboxylique ou les sels d'ammonium quaternaire ou par une structure spécifique hydrosoluble d'un constituant du composant C de la microparticule choisi par exemple parmi les (méth)acrylates de polyéthylène glycol ou d'autres polyéthers diols hydrosolubles ou hydrodispersibles. Une composition de dispersion aqueuse de polymère peut aussi comprendre des polymères comportant des fonctions réactives propres à ce polymère qui peuvent participer à la réticulation. La réticulation de ces compositions de dispersion aqueuse de polymère contenant les microparticules de l'invention est réalisée, après application d'un film et filmification de cette composition sur un substrat, soit par voie radicalaire thermique, soit par voie de rayonnement UV ou faisceau d'électrons.

Une autre composition préférée de revêtement de l'invention est une composition réticulable comprenant des dérivés époxydés et des microparticules de l'invention et réticulable soit par rayonnement UV en présence d'un photoamorceur cationique, soit par réaction de condensation avec au moins un deuxième composant réactif sélectionné parmi : les polyamines et/ou les polymères ou copolymères fonctionnalisés carboxy ou anhydride carboxylique.

Les dérivés époxydés sont sélectionnés parmi les monomères, oligomères ou copolymères ou résines époxydés de fonctionnalité allant de 1 à 50. Plus particulièrement, dans le cas des compositions réticulables par voie photochimique en présence d'un photoamorceur cationique, les monomères ou oligomères époxydés sont de préférence de structure cycloaliphatique. Parmi les dérivés époxydés cycloaliphatiques, nous pouvons citer : le cyclohéxène époxydé, le 3,4 époxy cyclohexyl méthyl-3',4' époxycyclohexane carboxylate, les époxydes cycloaliphatiques décrits dans WO 98/28286 ou WO 98/45349.

Dans le cas où les compositions sont réticulables par voie cationique photochimique, les microparticules de l'invention sont choisies de préférence parmi les microparticules portant des fonctions f1 époxy et/ou hydroxy. La composition réticulable par condensation comprend de préférence des microparticules portant des fonctions f1 époxy et/ou hydroxy et/ou carboxy et/ou anhydride et/ou isocyanate et/ou amine.

Les compositions de revêtement de l'invention s'appliquent également aux compositions comprenant au moins une résine réactive sélectionnée parmi : les alkydes ou polyesters insaturés ou polyesters saturés ou polyamides ou polyuréthanes ou polyurées avec des microparticules de l'invention, comportant de préférence des fonctions f1 et/ou f2 réactives avec au moins une fonction portée par cette ou ces résine(s) réactive(s).

Les fonctions f1 et/ou f2 permettent ainsi un meilleur ancrage des microparticules dans la matrice organique avec un meilleur effet de renforcement et/ou de flexibilisation de la matrice organique. Par exemple, dans le cas des résines alkydes, les fonctions f1 et/ou f2 peuvent être des fonctions siccatives telles que des insaturations à base de dicyclopentadiène ou d'esters allyliques ou d'esters ou d'amides gras insaturés.

Dans le cas des polyesters insaturés, les fonctions f2 peuvent être des (méth)acrylates et de préférence des maléates ou fumarates. Des fonctions f1 telles qu'anhydride ou isocyanate peuvent être envisagées coréactives avec des fonctions OH terminales portées par le polyester insaturé. Des fonctions f1 carboxy peuvent par exemple être envisagées pour le mûrissement des polyesters insaturés par la magnésie, selon un procédé de mûrissement par la magnésie bien connu par l'homme du métier. Des fonctions f1 analogues peuvent être envisagées et adaptées par l'homme du métier dans le cas : des polyesters saturés, des polyamides ou polyuréthanes ou polyurées. Ces compositions de revêtement peuvent comprendre, en plus des composants réactifs, d'autres additifs ou charges habituelles adaptées au besoin spécifique de chaque application finale.

L'invention concerne aussi des compositions de moulage ou de composites qui peuvent être des compositions de moulage comprenant des charges et/ou des renforts. Ces compositions de moulage ou de composite peuvent comprendre au moins une résine réactive sélectionnée parmi les polyesters insaturés, les résines de dicyclopentadiène, les vinyl esters, les époxydes et polyamines ou les polyuréthanes et polyurées ou polyuréthane-urées ou les cyanates esters ou les bismaléimides, avec des microparticules de l'invention comportant de préférence des fonctions f1 et/ou f2 réactives avec au moins une fonction portée par cette ou ces résine(s) réactive(s).

Les compositions de moulage contenant les microparticules de l'invention peuvent comprendre des charges minérales et/ou organiques et/ou des renforts choisis parmi : les fibres de verre, les mats de verre, les fibres de carbone, les fibres de cellulose, les fibres polyesters ou polyamides.

Un avantage particulier des microparticules de l'invention est qu'elles permettent une réduction de la viscosité des compositions de revêtement ou de moulage, et par conséquent une réduction significative des diluants réactifs ou non réactifs, de manière à mieux respecter les limitations environnementales. Ainsi ces microparticules permettent par leur présence à la fois : le respect d'un faible taux de composés organiques volatils (VOC), l'incorporation de plus forts taux de charges ou d'additifs et l'amélioration des propriétés mécaniques des matériaux concernés de revêtement ou de moulage ou de composite. Plus particulièrement, la présence de ces microparticules ayant une fonctionnalité adaptée à chaque application permet un bon compromis de dureté / flexibilité et d'adhérence sur substrats divers et plus particulièrement difficiles.

Le domaine d'application de ces compositions est large et comprend : les vernis de protection, les peintures, les adhésifs, les encres, les poudres pour revêtements, les poudres à mouler, les pièces moulées, les composites.

Les exemples suivants illustrent les objets de l'invention.

Exemples

Conditions expérimentales générales

Les substrats

Les formulations photoréticulables sont déposées sur les substrats suivants :

- Aluminium Q-panel (panneaux de dimensions : 0,6 x 76 x 152 mm$^3$ fournis par la société LABOMAT ESSOR) dégraissé à l'acétate d'éthyle
- Verre (nettoyé à l'acétone)
- Polycarbonate (plaque LEXAN de la société SCERT PLASTIQUE, épaisseur 2 mm)
- Polypropylène (référence PP301460 fourni par la société GOODFELLOW, épaisseur 0,5 mm)
- Polyéthylène basse densité (référence ET11452 fourni par la société GOODFELLOW, épaisseur 0,5 mm)

Polycarbonate, polyéthylène et polypropylène sont préalablement nettoyés à l'éthanol avant application du revêtement.

Pour le besoin de certaines caractérisations (par exemple la mesure de l'adhérence), les substrats polyoléfine (polyéthylène et polypropylène) sont traités par le procédé Corona avant dépôt de la formulation (selon les conditions décrites dans Int. Pol. Sci. Technol., N°8, 1996, p 630).

Formulations photoréticulables de revêtements

Dans les exemples présentés ci-après, les revêtements sont obtenus par polymérisation radicalaire d'une formulation photoréticulable sous lampe UV moyenne pression de type FUSION (puissance électrique : 120 W/cm) après 6 passages à 4,6 m/min. Ces conditions assurent dans tous les cas une conversion maximale des doubles liaisons acrylate.

Caractérisation

Mesure de la viscosité des formulations

La viscosité des formulations photoréticulables est un paramètre très important pour la mise en oeuvre de films photopolymérisés et l'obtention de revêtements de faible épaisseur. Dans tout ce qui suit, les viscosités des formulations sont mesurées à l'aide d'un viscosimètre cône-plan à contrainte imposée de type CARRI-MED CSL 100 (CSL RHEOMETER) à 20°C, lors d'un balayage en gradient de cisaillement.

Mesure de la dureté des films photopolymérisés

La dureté est mesurée par microindentation instrumentée (appareil FISCHERSCOPE H100) à 23°C. L'indenteur est une pyramide de type Vickers d'angle au sommet de 136°. Les valeurs de dureté présentées dans la suite correspondent aux valeurs de dureté « universelle » calculées selon l'expression :

$$H_u = \frac{P}{k\delta^2}$$

où P est la charge maximale imposée, $\delta$ la profondeur indentée, et k une constante dépendante de la géométrie de l'indenteur. La charge P est déterminée de façon à ce que :

i) la profondeur indentée soit inférieure à 1/5 de l'épaisseur totale du film,
ii) la dureté mesurée soit sensiblement constante avec l'épaisseur inderitée.

Les films sont systématiquement analysés 24 heures après polymérisation et conservés à 23°C et à 50% d'humidité relative.

Mesure de la flexibilité des revêtements

La flexibilité des systèmes sur substrat est estimée par le test du « T-bend ». Le test consiste à enrouler le substrat revêtu sur lui-même et à déterminer le nombre de tours au bout duquel le revêtement situé sur pli n'est plus endommagé. Les tours successifs sont désignés par 0 T, 0,5 T, 1 T, ... (voir description du test dans Lowe C., Rad. Cur, Vol. 183, n° 4337, p. 464). Dans tous les cas, l'épaisseur des films est inférieure à 50 µm et plus généralement de l'ordre de 20 µm.
Le substrat utilisé est un aluminium de type Q-panel décrit ci-dessus.
Le test du T-bend est réalisé à l'aide d'une presse manuelle. La observation à la loupe binoculaire (grossissement x 12). Une bonne flexibilité correspond en général à une valeur inférieure ou égale à 2 T.
Les films sont systématiquement analysés 24 heures après réticulation et conservés à 23°C et à 50% d'humidité relative.

Mesure des propriétés mécaniques du film libre aux grandes déformations

Les propriétés mécaniques de films libres aux grandes déformations sont mesurées en traction uniaxiale à vitesse constante (1 mm/min) et à température ambiante. Les films réticulés sont découpés à l'aide d'un emporte-pièce en forme d'haltère. Les éprouvettes ainsi obtenues sont marquées de deux pastilles réfléchissantes distantes de 20 mm de façon à suivre l'allongement lors de la déformation à l'aide d'un extensomètre externe. Les dimensions effectives de l'échantillon sont typiquement de 20x4x0,1 mm$^3$.

Mesure des propriétés d'adhérence

L'adhérence des systèmes est estimée par le test du quadrillage (norme ISO 2409) sur les substrats précisés ci-dessus. Une note allant de 0 à 5 qualifie la tenue du film quadrillé lorsqu'il est pelé par un adhésif de force connue (la valeur « 0 » indique que le film est totalement resté sur le substrat ; « 5 » indique que le film a totalement été pelé). Dans notre cas, la force de pelage de l'adhésif utilisé (provenance : TESA) pour le test de quadrillage est de 240 $\pm$ 5 cN/cm (mesurée à 180° sur plaque d'acier inoxydable). L'épaisseur des revêtements est de l'ordre de 20 µm.
Les films sont systématiquement analysés 24 heures après polymérisation et conservés à 23°C et à 50% d'humidité relative.

Mesure de la résistance à l'abrasion

La résistance à l'abrasion est mesurée par le test TABER selon la norme NFT 30-015 (appareil 5150 ABRASER de TABER INDUSTRY). Le test consiste à mesurer la perte de masse entraînée par deux roues abrasives après 100 tours.

Les films sont systématiquement analysés 24 heures après polymérisation et conservés à 23°C et à 50% d'humidité relative.

Mesure de la résistance chimique

La résistance des revêtements à une agression chimique est évaluée par le test dit du « rub-test » consistant à mesurer le temps avant détérioration totale du film lorsque l'on applique, à la surface de ce dernier, un mouvement circulaire et continu à l'aide d'un chiffon imbibé de solvant. Dans les cas traités ci-après, le solvant est la méthyl éthyl cétone (MEK). Les films sont réalisés sur plaques de verre.

L'épaisseur du revêtement est maintenue constante et est comprise entre 40 et 50 μm dans tous les cas.

Exemple 1

Synthèse de Microparticules Polymère Réticulées (MPR)

131,3 g de n-heptane et 131,5 g de propanol-2 sont introduits dans un réacteur de 500 ml équipé d'un réfrigérant et d'une agitation mécanique et sous un léger flux d'azote. La température est portée à 70°C. Un mélange de monomères (méth)acryliques de composition donnée ci-dessous est ensuite chargé dans le réacteur :

- acrylate d'isobornyle : 69,80 g, soit 76% molaire (par rapport aux monomères)
- diacrylate d'hexane diol : 5,02 g, soit 5% molaire (par rapport aux monomères)
- méthacrylate de glycidyle : 11,96 g, soit 19% molaire (par rapport aux monomères)

La température est stabilisée à 70°C et 0,78g d'azobisisobutyronitrile (soit 10 mmol/l par rapport aux monomères) est introduit dans le réacteur. La réaction se déroule en isotherme (70°C) pendant 5 h, sans noter d'exothermie significative. La dispersion reste transparente et homogène, de faible viscosité, durant toute la durée de la synthèse. A la fin des 5 h de réaction, la conversion des monomères est supérieure à 95% d'après le suivi des monomères par chromatographie d'exclusion stérique et par la mesure du taux de solides dans la solution. Les MPR formées sont isolées par distillation des solvants de synthèse : le réfrigérant est remplacé par une colonne à distiller et 87,5 g de toluène sont rajoutés et la température est progressivement augmentée jusqu'à 105°C.

Les MPR sont ensuite acrylées par réaction avec l'acide acrylique, à 100°C, en présence d'un catalyseur de réaction, 0,8% en masse de düsopropyl salicylate de chrome III, et de 0,3% en masse d'hydroquinone pour éviter toute polymérisation radicalaire des fonctions acryliques. La modification chimique se déroule à 50% de solide, en solution dans le toluène, dans un réacteur de 250 ml équipé d'un réfrigérant et d'une agitation mécanique, sous un léger flux d'azote. L'acide acrylique est introduit en léger excès par rapport aux groupes époxydes tel que le rapport des concentrations en fonction soit : [acide]/[époxy] = 1,05. En fin de modification chimique, les MPR sont isolées par séchage sous vide (20 mbar) à température ambiante. La conversion finale des groupes époxydes est de 95%, ce qui correspond à une concentration en doubles liaisons acryliques réactives de [C=C] = 9,1 $10^{-4}$ mol/g. Les MPR séchées se présentent sous forme d'un solide, qui peut être broyé en fine poudre.

La taille et la masse des MPR sont déterminées par une technique de diffusion de lumière LASER à angles multiples (référence : DAWN de WYATT TECHNOLOGY, opérant à 632 nm), en sortie des colonnes de chromatographie par exclusion stérique. La masse molaire et la taille des MPR sont :

$$\overline{M_w} = 5,8\ 10^5\ \text{g/mol et}\ \overline{R_z} = 31\ \text{nm}$$

La température du début de la zone de transition vitreuse $T_g^{onset}$ de ces MPR, mesurée par analyse calorimétrique différentielle est de 62°C.

Exemple 2

Une formulation photoréticulable de référence (F1) constituée sur 100 parties (en poids) de :

- 47,5 parties de acrylate d'isobornyle (SR 506, CRAY VALLEY)
- 47,5 parties d'un oligomère acrylé référencé PRO 971 de SARTOMER
- 3 parties de Darocur 1173 (CIBA GEIGY)

- 2 parties d'Irgacure 184 (CIBA GEIGY)

a été réalisée à température ambiante. L'oligomère acrylé PRO 971 est un copolymère obtenu par voie radicalaire, correspondant au produit vendu en dilution référencé CN 818 par la société SARTOMER et composé :

- de acrylate de butyle
- de méthacrylate de méthyle
- de méthacrylate de glycidyle

La fonction glycidyle de l'oligomère est modifiée en 2ème étape par réaction avec l'acide acrylique pour donner l'oligomère acrylé.

Afin d'évaluer l'apport de MPR sur le plan du compromis dureté /flexibilité / adhérence du film final, la formulation photoréticulable suivante (F2) a été effectuée :

sur 100 parties :

- 47,5 parties d'acrylate d'isobornyle (SR 506, CRAY VALLEY)
- 19 parties de MPR acrylés de l'exemple 1
- 28,5 parties de PRO 971 (SARTOMER)
- 3 parties de Darocur 1173 (CIBA GEIGY)
- 2 parties d'Irgacure 184 (CIBA GEIGY)

Les deux formulations ont une viscosité très proche à 20°C. Les résultats du Tableau I montrent que la formulation F2 présente un caractère rhéofluidifiant.

Les propriétés des films correspondants sont récapitulées Tableau II. Les épaisseurs des revêtements pour la mesure de dureté sont de l'ordre de 80 à 100 $\mu$m.

Tableau I -

| Valeurs des viscosités des formulations à 50 et 250 $s^{-1}$ mesurées à 20°C | | |
|---|---|---|
| Formulation | Gradient de cisaillement ($s^{-1}$) | Viscosité (Pa.s) |
| F1 | 50 | 2 |
| | 250 | 2 |
| F2 | 50 | 1,77 |
| | 250 | 1,64 |

Tableau II -

| | Dureté ($N/mm^2$) | Flexibilité « T-Bend » | Résistance au quadrillage sur verre (adhérence) | Résistance chimique (s) |
|---|---|---|---|---|
| Récapitulatif des propriétés physiques des films obtenus à partir de F1 et F2 | | | | |
| F1 | 42 | 1,5 T | 5 | 80 ± 10 |
| F2 | 76 | 1, 5 T | 1 | 80 ± 10 |

Exemple 3

Les MPR de l'exemple 1 sont introduites dans un mélange de monomères acryliques (mélange A) suivant :

- acrylate d'isobornyle (SR 506) : 60% en masse
- acrylate d'isodécyle (SR 395, provenance CRAY VALLEY) : 38% en masse
- Diacrylate d'hexane diol (SR 238) : 2% en masse

Des formulations photoréticulables à base du mélange A et contenant différentes concentrations massiques de MPR sont réalisées. Les compositions sont récapitulées Tableau III.

Tableau III -

| Compositions des différentes formulations utilisées dans l'exemple 3 (sur 100 parties) | | | | |
|---|---|---|---|---|
| Formulations | Mélange A | MPR | Darocur 1173 | Irgacure 184 |
| F3 (Réf) | 95 | 0 | 3 | 2 |
| F4 | 90,25 | 4,75 | 3 | 2 |
| F5 | 87,9 | 7,1 | 3 | 2 |
| F6 | 85,5 | 9,5 | 3 | 2 |
| F7 | 80,75 | 14,25 | 3 | 2 |
| F8 | 76 | 19 | 3 | 2 |
| F9 | 66,5 | 28,5 | 3 | 2 |
| F10 | 57 | 38 | 3 | 2 |

Tableau IV -

| Viscosité des formulations à 20°C | | |
|---|---|---|
| Formulations | Gradient de cisaillement $(s^{-1})$ | Viscosité (Pa. s) |
| F6 | 50 | 0,04 |
| | 250 | 0,03 |
| F8 | 50 | 0,18 |
| | 250 | 0,14 |
| F9 | 50 | 0,65 |
| | 250 | 0,50 |
| F10 | 50 | 2, 78 |
| | 250 | 2,16 |

Les propriétés physico-chimiques (dureté, flexibilité, résistance chimique) des différents revêtements sont présentées au Tableau V récapitulatif. Les épaisseurs des films pour la mesure de dureté sont de 20 à 25 µm.

Tableau V -

| Propriétés physico-chimiques des revêtements | | | |
|---|---|---|---|
| Formulations | Dureté $(N/mm^2)$ | Flexibilité « T-Bend » | Résistance chimique (s) |
| F3 | (a) | 0 T | 20 ± 10 |
| F8 | =5 | 1 T | 55 ± 10 |
| F9 | 52 | 1 T | 65 ± 10 |
| F10 | 80 | 1,5 T | 60 ± 10 |

(a) : non mesurable (valeur trop faible)

Le Tableau VI présente les résultats des tests d'abrasion, comparés aux valeurs obtenues avec un revêtement pris comme exemple de comparaison présentant une bonne tenue à l'abrasion. Les propriétés d'abrasion sont mesurées sur des films de 80 à 100 µm.

Tableau VI -

| Propriétés d'abrasion des revêtements | | |
|---|---|---|
| Formulations | Résistance à l'abrasion (mg) | Rappel des valeurs de dureté (N/mm$^2$) |
| F3 | 16,3 | _(a) |
| F9 | 36 | 52 |
| F10 | 40,8 | 80 |
| *Référence* [b] | *30* | *14* |

*(a) : non mesurable (valeur trop faible)*

*(b) : composition, pour 100 p, de la formulation*
- *20 p CN976 (provenance CRAY VALLEY)*
- *52 p CN550 (provenance CRAY VALLEY)*
- *23 p CN501 (provenance CRAY VALLEY)*
- *3 p Darocur 1173*
- *2 p Irgacure 184*

Le Tableau VII présente les mesures d'adhérence sur différents substrats

Tableau VII -

| Propriétés d'adhérence des revêtements | | | | | | | |
|---|---|---|---|---|---|---|---|
| Formulations | Aluminium | verre | Polycarbonate (PC) | Polyéthylène (PE) | Polypropylène (PP) | PE traité corona | PP traité corona |
| F3 | 0 | 0 | 0 | 5 | 5 | 5 | 5 |
| F4 | 0 | 0 | 0 | 5 | 5 | 5 | 5 |
| F5 | 0 | 0 | 0 | 5 | 0 | 0 | 0 |
| F6 | 0 | 0 | 0 | 0 | 0 | 0 | 0 |
| F7 | 0 | 0 | 0 | 0 | 0 | 0 | 0 |
| F8 | 0 | 0 | 0 | 5 | 0 | 0 | 0 |
| F9 | 0 | 0 | 5 | 5 | 5 | 0 | 0 |
| F10 | 0 | 0 | 5 | 5 | 5 | 5 | 5 |

Ces exemples illustrent parfaitement une augmentation simultanée des propriétés d'adhérence et de dureté dans le cas de revêtements contenant des MPR de l'invention.

Exemple 4

La formulation réalisée contient :

- 46,55 parties (poids) de acrylate d'isobornyle (SR 506)
- 19,95 p. de acrylate de 2-2(éthoxy éthoxy)-éthyle (SR 256 de CRAY VALLEY)
- 28,5 p. de MPR de l'exemple 1
- 3 p. de Darocur 1173
- 2 p. d'Irgacure 184

Les propriétés mécaniques mesurées à 23°C sur le film libre sont :
Module d'Young = 130 MPa
Allongement à la rupture = 70%
Contrainte à la rupture = 12,5 MPa
Ces résultats illustrent pour ce revêtement un bon compromis dureté / flexibilité avec une bonne adhérence du revêtement sur verre et aluminium. Le film de référence sans MPR est extrêmement cassant avec un allongement à la rupture pratiquement nul qui ne permet pas d'être caractérisé selon les méthodes décrites précédemment.

**Revendications**

1. Microparticules réticulées de taille entre 10 et 300 nm, obtenues par polymérisation d'une composition de composés polymérisables éthyléniquement insaturés, **caractérisées en ce que** la composition des polymérisables comprend :

   - un premier composant A représentant de 50 à 99% en moles de ladite composition et constitué d'isobornyl (méth)acrylate et/ou de norbornyl (méth)acrylate et/ou cyclohexyl (méth)acrylate et/ou (méth)acrylate de Cardura E10 et optionnellement en combinaison avec un alkyl (méth)acrylate en $C_2$-$C_8$
   - un deuxième composant B constitué d'au moins un monomère ou oligomère comportant au moins deux insaturations éthyléniques polymérisables par voie radicalaire, le composant B étant constitué d'un monomère ou d'un oligomère ou d'un mélange de monomères ou d'oligomères ou d'un mélange de monomères et d'oligomères choisis parmi :

      - les di(méth)acrylates d'éthylène glycol, de propylène glycol, de butane diol, de méthyl-2 propane diol, de néopentyl glycol, d'hexane diol, de zinc et/ou de calcium, les tri(méth)acrylates de glycérol, de triméthylol propane et/ou des dérivés alkoxylés, les tri- ou tetra(méth)acrylates de pentaérythritol et les penta ou hexa(méth)acrylates de dipentaérythritol, oligomères de diol de polyéthers, polyesters, polyuréthanes de Mn inférieure à 2500 ;
      - les divinyl benzènes substitués ou non substitués ;
      - les oligomères polyesters insaturés ou acryliques acrylés de Mn inférieure à 2500 ayant un nombre d'insaturations éthyléniques par mole de 2 à 50
      - un troisième composant C constitué d'au moins un monomère ou oligomère comportant en plus d'une insaturation éthylénique polymérisable par voie radicalaire au moins une deuxième fonction réactive f1 différente de l'insaturation éthylénique

   avec la possibilité de modification chimique au moins partielle des fonctions initiales f1 en fonctions finales f2 sous condition que les fonctions f1 sélectionnées ne réagissent pas entre elles lors de la polymérisation,
   avec la somme des composants A, B, C étant de 100%.

2. Microparticules selon la revendication 1 **caractérisées en ce qu'**elles portent des fonctions f1 apportées par le composant C sélectionnées parmi : époxy, hydroxy, carboxy, anhydride carboxylique, isocyanate, silane, amine, oxazoline et le cas échéant des fonctions f1 au moins partiellement modifiées en fonctions f2 sélectionnées parmi : (méth)acrylates, vinyles, maléates, maléimides, itaconates, esters d'alcools allyliques, insaturations à base de dicyclopentadiène, esters ou amides gras insaturés en $C_{12}$-$C_{22}$, sels d'acide carboxylique ou sels d'arrunonium quaternaire.

3. Microparticules selon l'une des revendications 1 ou 2 **caractérisées en ce que** le composant C est présent à un taux molaire d'au plus 49,5% en moles par rapport à la somme des polymérisables et est sélectionné parmi : le (méth)acrylate de glycidyle, les hydroxyalkyl (méth)acrylates en $C_2$-$C_6$, l'acide (méth)acrylate, l'anhydride ou acide maléique ou l'acide fumarique, l'anhydride ou acide itaconique, l'isocyanatoéthyl (méth)acrylate, le diméthyl aminoéthyl (méth)acrylate, le 2-(5-méthacryloyl-pentyl)1,3 oxazoline.

4. Microparticules selon l'une des revendications 1 à 3 **caractérisées en ce que** la composition des polymérisables comprend :

   - 50 à 95% d'un composant A constitué d'isobornyl (méth)acrylate et/ou de norbornyl (méth)acrylate et/ou butyl (méth)acrylate
   - 0,5 à 10% d'un composant B constitué d'au moins un monomère et/ou oligomère sélectionné parmi :

      - les di(méth)acrylates de : éthylène glycol, propylène glycol, butane diol, méthyl-2 propane diol, néopentyl glycol, hexane diol, oligomères diols de Mn inférieure à 2500, polyéthers, polyesters, polyuréthanes
      - les divinyl benzènes substitués ou non substitués
      - les oligomères polyesters insaturés ou oligomères acryliques acrylés de Mn inférieure à 2500 ayant un nombre d'insaturations éthyléniques par mole de 2 à 50

   - au plus 49,5% en moles d'un composant C constitué d'au moins un monomère et/ou oligomère sélectionné parmi :

- l'acide (méth)acrylique, l'acide maléique ou fumarique ou itaconique pour f1 étant une fonction carboxy
- l'anhydride maléique, l'anhydride itaconique pour f1 étant une fonction anhydride carboxylique
- les hydroxy alkyl (méth)acrylates avec un alkyl en $C_2$-$C_6$ ou les mono(méth)acrylates d'oligomères polyéther- ou polyester- ou polyuréthane- diols ou de polycaprolactone de Mn inférieure à 1500, pour f1 étant une fonction hydroxy
- le (méth)acrylate de glycidyle, les (méth)acrylates de derivés époxydés de dicyclopentadiène ou les (méth) acrylates de vinyl norbornène époxydés ou les (méth)acrylates de glycidyle éther alkoxylés ou les (méth) acrylates de dérivés époxydés de cyclohéxène, pour f1 étant une fonction époxy
- l'isocyanatoéthyl (méth)acrylate et les mono(méth)acrylates uréthanes dérivés de diisocyanates, pour f1 étant une fonction isocyanate
- les (méth)acrylates portant un groupement trialkyl ou trialkoxy silane, pour f1 étant une fonction silane
- le diméthylaminoéthyl (méth)acrylate ou le tertiobutylaminoéthyl (méth)acrylate, pour f1 étant une fonction amine
- le 2-(5-méthacryloyl-pentyl)1,3 oxazoline, pour f1 étant une fonction oxazoline

avec la somme A + B + C étant égale à 100 %

**5.** Microparticules selon l'une des revendications 1 à 4 **caractérisées en ce qu'**elles portent des fonctions f1 carboxy ou des fonctions f1 hydroxy partiellement ou complètement modifiées en fonctions f2 (méth)acrylates et/ou vinyles et/ou maléates et/ou fumarates et/ou maléimides et/ou sels d'acide carboxylique.

**6.** Microparticules selon l'une des revendications 1 à 5 **caractérisées en ce qu'**elles portent des fonctions f1 époxy et/ou hydroxy partiellement modifiées en fonctions f2 (méth)acrylates.

**7.** Procédé de préparation de microparticules telles que définies à l'une des revendications 1 à 6 **caractérisé en ce qu'**il comprend une étape de polymérisation en dispersion par voie radicalaire en milieu non aqueux, non solvant du polymère formé, d'une composition de composés polymérisables telle que définie à l'une des revendications 1 à 4, sans aucune addition de polymère stabilisant pour les microparticules formées, ni avant, ni pendant, ni après polymérisation, ledit procédé pouvant comprendre le cas échéant une étape supplémentaire de modification chimique au moins partielle des fonctions f1 apportées par le composant C tel que défini à l'une des revendications 1 à 3 et 4.

**8.** Composition de revêtements ou de moulage ou de composites **caractérisée en ce qu'**elle comprend des microparticules telles que définies à l'une des revendications 1 à 6.

**9.** Composition selon la revendication 8 **caractérisée en ce qu'**elle est réticulable et constituée uniquement ou essentiellement de microparticules telles que définies à l'une des revendications 1 à 6 comportant des fonctions f1 et/ou f2 identiques ou différentes réticulables entre microparticules et formant au moins un réseau de réticulation.

**10.** Composition selon la revendication 8 **caractérisée en ce qu'**elle comprend de 0,5 à 50% en poids de microparticules telles que définies à l'une des revendications 1 à 6.

**11.** Composition selon l'une des revendications 8 à 10 **caractérisée en ce que** ladite composition est une composition de revêtement.

**12.** Composition selon la revendication 11 **caractérisée en ce que** la composition de revêtement est une composition réticulable par voie radicalaire comprenant des monomères mono ou multifonctionnels acryliques ou vinyliques et/ou oligomères acryliques multifonctionnels et des microparticules définies selon l'une des revendications 1 à 6 portant des fonctions f2 (méth)acrylates et/ou maléates et/ou fumarates et/ou maléimides issues de la modification au moins partielle de fonctions f1 de départ.

**13.** Composition selon la revendication 11 ou 12 **caractérisée en ce que** la composition de revêtement est une composition réticulable par rayonnement.

**14.** Composition selon la revendication 12 ou 13 **caractérisée en ce que** la composition réticulable comprend comme monomères acryliques l'isobornyl (méth)acrylate et/ou l'isodécyl (méth)acrylate, lauryl (méth)acrylate, 2-2(éthoxy éthoxy) éthyl (méth)acrylate, tridécyl (méth)acrylate, 2 phénoxy éthyl (méth)acrylate, tetrahydrofurfuryl (méth) acrylate et/ou comme oligomères acryliques au moins un oligomère acrylique choisi parmi : polyéthers (méth)acrylates, polyesters (méth)acrylates, polyuréthanes (méth)acrylates, polycaprolactone (méth)acrylates, époxy (méth)acrylates et copolymères acryliques (méth)acrylés.

15. Composition de revêtement telle que définie à l'une des revendications 11 à 13 **caractérisée en ce qu'**elle est destinée à être appliquée ou est appliquée sous forme de revêtement sur des substrats polaires ou non polaires et comprend :

- 0,5 à 50% et de préférence de 5 à 30% en poids de microparticules telles que définies à l'une des revendications 1 à 6 portant des fonctions f2 (méth)acrylates et/ou maléates et/ou fumarates et/ou maléimides
- 50 à 99,5% en poids d'au moins un monomère choisi parmi l'isobornyl (méth)acrylate et/ou l'isodécyl (méth) acrylate ou lauryl (méth)acrylate, tridécyl (méth)acrylate
- 0 à 5% en poids de di(méth)acrylate d'alkylène diol en $C_2$-$C_6$

les pourcentages étant choisis de telle manière que la somme totale des microparticules et monomères soit égale à 100%.

16. Composition de revêtement selon la revendication 15 **caractérisée en ce que** :

- les substrats polaires sont : le verre, l'acier, l'aluminium, le silicium, le polycarbonate, le bois, les fibres de verre, fibres de carbone, fibres de cellulose, fibres polyesters ou polyamides
- les substrats non polaires sont: les polyoléfines et plus particulièrement le polyéthylène, le polypropylène et copolymères éthylène-propylène avec ou sans traitement spécial de surface et les revêtements de faible tension de surface

17. Composition de revêtement selon la revendication 15 ou 16 **caractérisée en ce qu'**elle est appliquée sur le substrat sous forme de film mince d'épaisseur inférieure à 100 microns de préférence inférieure à 50 microns.

18. Composition selon la revendication 11 **caractérisée en ce que** ladite composition de revêtement est une composition de dispersion aqueuse de polymère réticulable, comprenant des microparticules hydrodispersibles ou hydrosolubles réactives, participant à la réticulation.

19. Composition de revêtement selon l'une des revendications 8 à 11 **caractérisée en ce que** ladite composition est une composition comprenant des dérivés époxydés.

20. Composition de revêtement selon la revendication 19 **caractérisée en ce qu'**elle est réticulable par rayonnement UV en présence d'un photoamorceur cationique et comprend des microparticules portant des fonctions f1 époxy et/ou hydroxy.

21. Composition de revêtement selon la revendication 19 **caractérisée en ce qu'**elle est réticulable par réaction de condensation avec au moins un deuxième composant réactif sélectionné parmi : les polyamines et/ ou les polymères ou copolymères fonctionnalisés carboxy ou anhydride carboxylique.

22. Composition de revêtement selon les revendications 19 et 21 **caractérisée en ce que** dans le cas où la composition est réticulable par réaction de condensation, elle comprend des microparticules portant des fonctions f1 et/ou f2 époxy et/ou hydroxy et/ou carboxy et/ou anhydride.

23. Composition de revêtement selon l'une des revendications 8 à 11 **caractérisée en ce que** cette composition comprend au moins une résine réactive sélectionnée parmi les : alkydes ou polyesters insaturés ou polyester saturés ou polyamides ou polyuréthanes ou polyurées et des microparticules telles que définies à l'une des revendications 1 à 6 de préférence comportant des fonctions f1 et/ou f2 réactives avec au moins une fonction portée par cette ou ces résine(s) réactive(s).

24. Composition de moulage selon la revendication 8 à 10 **caractérisée en ce qu'**elle comprend au moins une résine réactive sélectionnée parmi les : polyesters insaturés, les résines de dicyclopentadiène, les vinyl esters, les époxydes et polyamines ou les polyuréthanes et polyurées ou polyuréthane-urées et des microparticules telles que définies à l'une des revendications 1 à 6 de préférence comportant des fonctions f1 et/ou f2 réactives avec au moins une fonction portée par cette ou ces résine(s) réactive(s).

**25.** Composition de moulage selon la revendication 24 **caractérisée en ce qu'**elle comprend des charges minérales et/ou organiques et/ou des renforts choisis parmi : les fibres de verre, les mats de verre, les fibres de carbone, les fibres de cellulose, les fibres polyesters ou polyamides.

**Patentansprüche**

**1.** Vernetzte Mikroteilchen mit einer Größe zwischen 10 und 300 nm, die durch Polymerisation einer Zusammensetzung aus ethylenisch ungesättigten polymerisierbaren Verbindungen erhältlich sind, **dadurch gekennzeichnet, daß** die Zusammensetzung aus den polymerisierbaren Verbindungen

- eine erste Komponente A, die 50 bis 99 Mol-% der Zusammensetzung ausmacht und aus Isobornyl-(meth) acrylat und/oder Norbornyl(meth)acrylat und/oder Cyclohexyl(meth)acrylat und/oder Cardura-E10-(meth) acrylat, gegebenenfalls in Kombination mit einem $C_2$-$C_8$-Alkyl(meth)acrylat, besteht,
- eine zweite Komponente B, die aus mindestens einem Monomer oder Oligomer mit mindestens zwei radikalisch polymerisierbaren ethylenischen Ungesättigtheiten besteht, wobei die Komponente B aus einem Monomer oder einem Oligomer oder einem Gemisch von Monomeren oder Oligomeren oder einem Gemisch von Monomeren und Oligomeren besteht, die unter

  - Di(meth)acrylaten von Ethylenglykol, Propylenglykol, Butandiol, Methyl-2-propandiol, Neopentylglykol, Hexandiol, Zink und/oder Calcium, Tri(meth)acrylaten von Glycerin, Trimethylolpropan und/oder alkoxylierten Derivaten, Pentaerythrittri(meth)-acrylat oder -tetra(meth)acrylat und Dipentaerythritpenta(meth) acrylat und -hexa(meth)-acrylat und Diololigomeren von Polyethern, Polyestern und Polyurethanen mit einem Mn von weniger als 2500,
  - gegebenenfalls substituierten Divinylbenzolen und
  - ungesättigten Polyesteroligomeren oder acrylierten Acryloligomeren mit einem Mn von weniger als 2500 und einer Zahl von ethylenischen Ungesättigtheiten pro mol von 2 bis 50

  ausgewählt sind,
- eine dritte Komponente C, die aus mindestens einem Monomer oder Oligomer, das neben einer einzigen radikalisch polymerisierbaren ethylenischen Ungesättigtheit mindestens eine zweite von der ethylenischen Ungesättigtheit verschiedene reaktive Funktion f1 enthält, besteht,

enthält,
mit der Möglichkeit einer zumindest teilweisen chemischen Modifizierung der Anfangsfunktionen f1 zu Endfunktionen f2, mit der Maßgabe, daß die gewählten Funktionen f1 bei der Polymerisation nicht miteinander reagieren, wobei die Summe der Komponenten A, B und C sich auf 100% beläuft.

**2.** Mikroteilchen nach Anspruch 1, **dadurch gekennzeichnet, daß** sie durch die Verbindung C beigebrachte Funktionen f1, die unter Epoxy, Hydroxy, Carboxy, Carbonsäureanhydrid, Isocyanat, Silan, Amin, Oxazolin oder gegebenenfalls zumindest teilweise zu Funktionen f2 modifizierte Funktionen f1, die unter (Meth)acrylat, Vinyl, Maleat, Maleinimid, Itaconat, Estern von Allylalkoholen, Ungesättigtheiten auf Basis von Dicyclopentadien, ungesättigten $C_{12}$-$C_{22}$-Fettsäureestern oder -amiden, Carbonsäuresalzen oder quaternären Ammoniumsalzen ausgewählt sind, tragen.

**3.** Mikroteilchen nach Anspruch 1 oder 2, **dadurch gekennzeichnet, daß** die Komponente C in einem molaren Anteil von höchstens 49,5 Mol-%, bezogen auf die Summe der polymerisierbaren Verbindungen, vorliegt und unter Glycidyl(meth)acrylat, $C_2$-$C_6$-Hydroxyalkyl(meth)acrylaten, (Meth)acrylsäure, Maleinsäure oder Maleinsäureanhydrid oder Fumarsäure, Itaconsäure oder Itaconsäureanhydrid, Isocyanatoethyl(meth)acrylat, Dimethylaminoethyl-(meth)acrylat und 2-(5-Methacryloylpentyl)-1,3-oxazolin ausgewählt ist.

**4.** Mikroteilchen nach einem der Ansprüche 1 bis 3, **dadurch gekennzeichnet, daß** die Zusammensetzung aus den polymerisierbaren Verbindungen:

- 50 bis 95% einer Komponente A, die aus Isobornyl(meth)acrylat und/oder Norbornyl-(meth)acrylat und/oder Butyl(meth)acrylat besteht,
- 0,5 bis 10% einer Komponente B, die aus mindestens einem unter

- Di(meth)acrylaten von Ethylenglykol, Propylenglykol, Butandiol, Methyl-2-propandiol, Neopentylglykol, Hexandiol, Diololigomeren mit einem Mn von weniger als 2500, Polyethern, Polyestern und Polyurethanen
- gegebenenfalls substituierten Divinylbenzolen und
- ungesättigten Polyesteroligomeren oder acrylierten Acryloligomeren mit einem Mn von weniger als 2500 und einer Zahl von ethylenischen Ungesättigtheiten pro mol von 2 bis 50

ausgewählten Monomer und/oder Oligomer besteht,
- höchstens 49,5 Mol-% einer Komponente C, die aus mindestens einem unter
- (Meth)acrylsäre, Maleinsäure, Fumarsäure oder Itaconsäure, wenn f1 eine Carboxyfunktion ist,
- Maleinsäureanhydrid oder Itaconsäureanhydrid, wenn f1 eine Carbonsäureanhydridfunktion ist,
- Hydroxyalkyl(meth)acrylaten mit einer $C_2$-$C_6$-Alkylgruppe oder Mono(methyl)acrylaten von Polyether-, Polyester- oder Polyurethandiololigomeren oder Polycaprolacton mit einem Mn von weniger als 1500, wenn f1 eine Hydroxyfunktion ist,
- Glycidyl(meth)acrylat, (Meth)acrylaten von Epoxidderivaten von Dicyclopentadien oder (Meth)acrylaten von Epoxidderivaten von Norbornen oder (Meth)acrylaten von alkoxylierten Glycidylethern oder (Meth)acrylaten von Epoxidderivaten von Cyclohexen, wenn f1 eine Epoxyfunktion ist,
- Isocyanatoethyl(meth)acrylat und Urethanmono-(meth)acrylaten, die von Diisocyanaten abgeleitet sind, wenn f1 eine Isocyanatfunktion ist,
- (Meth)acrylaten mit einer Trialkyl- oder Trialkyloxysilangruppe, wenn f1 eine Silanfunktion ist,
- Dimethylaminoethyl(meth)acrylat oder tert.-Butylaminoethyl(meth)acrylat, wenn f1 eine Aminfunktion ist,
- 2-(5-Methacryloylpentyl)-1,3-oxazolin, wenn f1 eine Oxazolinfunktion ist,

ausgewählten Monomer und Oligomer besteht,
enthält,
wobei die Summe der Komponenten A, B und C sich auf 100% beläuft.

5. Mikroteilchen nach einem der Ansprüche 1 bis 4, **dadurch gekennzeichnet, daß** sie Carboxyfunktionen f1 oder Hydroxyfunktionen f1, die teilweise oder vollständig zu Meth(acrylat)- und/oder Vinyl- und/oder Maleat- und/oder Fumarat- und/oder Maleinimid- und/oder Carbonsäuresalzfunktionen f2 modifiziert sind, tragen.

6. Mikroteilchen nach einem der Ansprüche 1 bis 5, **dadurch gekennzeichnet, daß** sie Epoxy- und/oder Hydroxyfunktionen f1, die teilweise zu (Meth)-acrylatfunktionen f2 modifiziert sind, tragen.

7. Verfahren zur Herstellung von Mikroteilchen gemäß einem der Ansprüche 1 bis 6 mit einem Schritt einer radikalischen Dispersionspolymerisation einer Zusammensetzung aus polymerisierbaren Verbindungen gemäß einem der Ansprüche 1 bis 4 in nichtwäßrigem Medium, bei dem es sich um ein Nichtlösungsmittel für das gebildete Polymer handelt, ohne Zusatz von Polymer mit stabilisierender Wirkung auf die gebildeten Mikroteilchen vor, während oder nach der Polymerisaton, gegebenenfalls mit einem zusätzlichen Schritt einer zumindest teilweisen chemischen Modifizierung der durch die Komponente C beigebrachten Funktionen f1 gemäß einem der Ansprüche 1 bis 3 und 4.

8. Verbund-, Beschichtungs- oder Formmasse, **dadurch gekennzeichnet, daß** sie Mikroteilchen gemäß einem der Ansprüche 1 bis 6 enthält.

9. Masse nach Anspruch 8, **dadurch gekennzeichnet, daß** sie vernetzbar ist und ausschließlich oder im wesentlichen aus Mikroteilchen gemäß einem der Ansprüche 1 bis 6 mit gleichen oder verschiedenen Funktionen f1 und/oder f2, die zwischen Mikroteilchen vernetzbar sind und mindestens ein Vernetzungsnetzwerk bilden, besteht.

10. Masse nach Anspruch 8, **dadurch gekennzeichnet, daß** sie 0,5 bis 50 Gew.-% Mikroteilchen gemäß einem der Ansprüche 1 bis 6 enthält.

11. Masse nach einem der Ansprüche 8 bis 10, **dadurch gekennzeichnet, daß** es sich dabei um eine Beschichtungsmasse handelt.

12. Masse nach Anspruch 11, **dadurch gekennzeichnet, daß** es sich bei der Beschichtungsmasse um eine radikalisch vernetzbare Masse handelt, die mono- und multifunktionelle Acryl- oder Vinylmonomere und/oder multifunktionelle Acryloligomere und Mikroteilchen gemäß einem der Ansprüche 1 bis 6 mit (Meth)acrylat- und/oder Maleat- und/oder Fumarat- und/oder Maleinimidfunktionen f2, die aus der zumindest teilweisen Modifizierung von Ausgangsfunktionen f1 hervorgegangen sind, enthält.

**13.** Masse nach Anspruch 11 oder 12, **dadurch gekennzeichnet, daß** die Beschichtungsmasse durch Strahlung vernetzbar ist.

**14.** Masse nach Anspruch 12 oder 13, **dadurch gekennzeichnet, daß** die vernetzbare Masse als Acrylmonomere Isobornyl(meth)acrylat und/oder Isodecyl-(meth)acrylat, Lauryl(meth)acrylat, 2-(2-Ethoxy-ethoxy)ethyl(meth)acrylat, Tridecyl(meth)acrylat, 2-Phenoxyethyl(meth)acrylat, Tetrahydrofurfuryl-(meth)acrylat und/oder als Acryloligomere mindestens ein unter Polyether(meth)acrylaten, Polyester(meth)acrylaten, Polyurethan(meth)-acrylaten, Polycaprolacton(meth)acrylaten, Epoxy-(meth)acrylaten und (meth)acrylierten Acrylcopolymeren ausgewähltes Acryloligomer enthält.

**15.** Beschichtungsmasse nach einem der Ansprüche 11 bis 13, **dadurch gekennzeichnet, daß** sie zur Auftragung in Form einer Beschichtung auf polare oder unpolare Substrate vorgesehen ist oder in Form einer Beschichtung auf polare oder unpolare Substrate aufgebracht ist und

- 0,5 bis 50 Gew.-% und vorzugsweise 5 bis 30 Gew.-% Mikroteilchen gemäß einem der Ansprüche 1 bis 6 mit (Meth)acrylat- und/oder Maleat- und/oder Fumarat- und/oder Maleinimidfunktionen f2,
- 50 bis 99,5 Gew.-% mindestens eines unter Isobornyl(meth)acrylat und/oder Isodecyl(meth)-acrylat oder Lauryl(meth)acrylat und Tridecyl-(meth)acrylat ausgewählten Monomers und
- 0 bis 5 Gew.-% $C_2$-$C_6$-Alkylendioldi(meth)acrylat

enthält,
wobei die Prozentanteile so gewählt sind, daß sich die Gesamtsumme von Mikroteilchen und Monomeren auf 100% beläuft.

**16.** Beschichtungsmasse nach Anspruch 15, **dadurch gekennzeichnet, daß**:

- es sich bei den polaren Substraten um Glas, Stahl, Aluminium, Silicium, Polycarbonat, Holz, Glasfasern, Kohlefasern, Cellulosefasern, Polyester- oder Polyamidfasern handelt und
- es sich bei den unpolaren Substraten um Polyolefine und insbesondere Polyethylen, Polypropylen und Ethylen-Propylen-Copolymere mit oder ohne spezielle Oberflächenbehandlung und Beschichtungen mit geringer Oberflächenspannung handelt.

**17.** Beschichtungsmasse nach Anspruch 15 oder 16, **dadurch gekennzeichnet, daß** sie in Form eines dünnen Films mit einer Dicke von weniger als 100 Mikron und vorzugsweise unter 50 Mikron auf das Substrat aufgebracht ist.

**18.** Masse nach Anspruch 11, **dadurch gekennzeichnet, daß** es sich bei der Beschichtungsmasse um eine Masse mit einer wäßrigen Dispersion von vernetzbarem Polymer handelt, die reaktive wasserdispergierbare oder wasserlösliche Mikroteilchen, die an der Vernetzung teilnehmen, enthält.

**19.** Beschichtungsmasse nach einem der Ansprüche 8 bis 11, **dadurch gekennzeichnet, daß** sie Epoxidderivate enthält.

**20.** Beschichtungsmasse nach Anspruch 19, **dadurch gekennzeichnet, daß** sie durch UV-Strahlung in Gegenwart eines kationischen Photoinitiators vernetzbar ist und Mikroteilchen mit Epoxy- und/oder Hydroxyfunktionen f1 enthält.

**21.** Beschichtungsmasse nach Anspruch 19, **dadurch gekennzeichnet, daß** sie durch Kondensationsreaktion mit mindestens einer zweiten reaktiven Komponente, die unter Polyaminen und/oder carboxy- oder carbonsäureanhydridfunktionalisierten Polymeren ausgewählt ist, vernetzbar ist.

**22.** Beschichtungsmasse nach einem der Ansprüche 19 bis 21, **dadurch gekennzeichnet, daß** die Masse in dem Fall, daß sie durch Kondensationsreaktion vernetzbar ist, Mikroteilchen mit Epoxy- und/oder Hydroxy- und/oder Carboxy- und/oder Anhydridfunktionen f1 und/oder f2 enthält.

**23.** Beschichtungsmasse nach einem der Ansprüche 8 bis 11, **dadurch gekennzeichnet, daß** sie mindestens ein unter Alkyden oder ungesättigten Polyestern oder gesättigten Polyestern oder Polyamiden oder Polyurethanen oder Polyharnstoffen ausgewähltes reaktives Harz und Mikroteilchen gemäß einem der Ansprüche 1 bis 6, die vorzugsweise gegenüber einer Funktion dieses reaktiven Harzes bzw. dieser reaktiven Harze reaktive Funktionen f1 und/oder f2 enthalten, enthält.

24. Formmasse nach einem der Ansprüche 8 bis 10, **dadurch gekennzeichnet, daß** sie mindestens ein unter ungesättigten Polyestern, Dicyclopentadienharzen, Vinylestern, Epoxiden und Polyaminen oder Polyurethanen und Polyharnstoffen oder Polyurethanharnstoffen ausgewähltes reaktives Harz und Mikroteilchen gemäß einem der Ansprüche 1 bis 6, die vorzugsweise gegenüber einer Funktion dieses reaktiven Harzes bzw. dieser reaktiven Harze reaktive Funktionen f1 und/oder f2 enthalten, enthält.

25. Formmasse nach Anspruch 24, **dadurch gekennzeichnet, daß** sie anorganische und/oder organische Füllstoffe und/oder Verstärkungsmittel, die unter Glasfasern, Glasmatten, Kohlefasern, Cellulosefasern und Polyester- oder Polyamidfasern ausgewählt sind, enthält.

## Claims

1. Crosslinked microparticles with a size of between 10 and 300 nm, obtained by polymerizing a composition of ethylenically unsaturated polymerizable compounds, **characterized in that** the composition of polymerizable compounds comprises:

   - a first component, A, representing from 50 to 99 mol% of the said composition and composed of isobornyl (meth)acrylate and/or norbornyl (meth)acrylate and/or cyclohexyl (meth)acrylate and/or Cardura E10 (meth) acrylate and optionally in combination with a $C_2$-$C_8$ alkyl (meth)acrylate;
   - a second component, B, composed of at least one monomer or oligomer containing at least two free-radically polymerizable ethylenic unsaturations, component B being composed of a monomer or an oligomer or a mixture of monomers or of oligomers or a mixture of monomers and of oligomers, selected from:

     - di(meth)acrylates of ethylene glycol, of propylene glycol, of butanediol, of 2-methylpropanediol, of neopentyl glycol, of hexanediol, of zinc and/or of calcium, tri(meth)acrylates of glycerol, of trimethylolpropane and/or of alkoxylated derivatives, tri- or tetra(meth)acrylates of pentaerythritol and penta- or hexa(meth) acrylates of dipentaerythritol, diol oligomers of polyethers, polyesters and polyurethanes, with an Mn of less than 2500;
     - substituted or unsubstituted divinylbenzenes; and
     - acrylated acrylic or unsaturated polyester oligomers with an Mn of less than 2500, having a number of ethylenic unsaturations per mole of 2 to 50;

   - a third component, C, composed of at least one monomer or oligomer containing in addition to a free-radically polymerizable ethylenic unsaturation at least one second reactive function, f1, different from the ethylenic unsaturation,

   with the possibility of at least partial chemical modification of the initial functions f1 to final functions f2, with the proviso that the functions f1 selected do not react with one another during the polymerization;
   with the sum of components A, B and C being 100%.

2. Microparticles according to Claim 1, **characterized in that** they carry functions f1 provided by component C and selected from: epoxy, hydroxyl, carboxyl, carboxylic anhydride, isocyanate, silane, amine and oxazoline, and, where appropriate, functions f1 at least partly modified to functions f2 selected from (meth)acrylates, vinyls, maleates, maleimides, itaconates, allyl alcohol esters, dicyclopentadiene-based unsaturations, $C_{12}$-$C_{22}$ unsaturated fatty esters or amides, carboxylic salts or quaternary ammonium salts.

3. Microparticles according to either of Claims 1 and 2, **characterized in that** component C is present in a molar fraction of not more than 49.5 mol% relative to the sum of the polymerizable compounds and is selected from: glycidyl (meth)acrylate, $C_2$-$C_6$ hydroxyalkyl (meth)acrylates, (meth)acrylic acid, maleic acid or anhydride or fumaric acid, itaconic acid or anhydride, isocyanatoethyl (meth)acrylate, dimethylaminoethyl (meth)acrylate and 2-(5-methacryloylpentyl)-1,3-oxazoline.

4. Microparticles according to one of Claims 1 to 3, **characterized in that** the composition of the polymerizable compounds comprises:

- 50% to 95% of a component A composed of isobornyl (meth)acrylate and/or norbornyl (meth)acrylate and/or butyl (meth)acrylate,
- 0.5% to 10% of a component B composed of at least one monomer and/or oligomer selected from:

  - di(meth)acrylates of ethylene glycol, propylene glycol, butanediol, 2-methylpropanediol, neopentyl glycol, hexanediol, diol oligomers with an Mn of less than 2500, polyethers, polyesters and polyurethanes,
  - substituted or unsubstituted divinylbenzenes, and
  - acrylated acrylic oligomers or unsaturated polyester oligomers with an Mn of less than 2500, having a number of ethylenic unsaturations per mole of 2 to 50,

- not more than 49.5 mol% of a component C composed of at least one monomer and/or oligomer selected from:

  - (meth)acrylic acid, maleic or fumaric or itaconic acid, for f1 being a carboxyl function,
  - maleic anhydride or itaconic anhydride, for f1 being a carboxylic anhydride function,
  - hydroxyalkyl (meth)acrylates with a $C_2$-$C_6$ alkyl or mono(meth)acrylates of polyether- or polyester- or polyurethane-diol oligomers or of polycaprolactone with an Mn of less than 1500, for f1 being a hydroxyl function,
  - glycidyl (meth)acrylate, (meth)acrylates of epoxideized dicyclopentadiene derivatives or epoxidized vinylnorbornene (meth)acrylates or alkoxylated glycidyl ether (meth)acrylates or (meth)acrylates of epoxidized cyclohexene derivatives, for f1 being an epoxy function,
  - isocyanatoethyl (meth)acrylate and urethane mono(meth)acrylates derived from diisocyanates, for f1 being an isocyanate function,
  - (meth)acrylates bearing a trialkyl- or trialkoxy-silane group, for f1 being a silane function,
  - dimethylaminoethyl (meth)acrylate or tert-butylaminoethyl (meth)acrylate, for f1 being an amine function, and
  - 2-(5-methacryloylpentyl)-1,3-oxazoline, for f1 being an oxazoline function;

with the sum A + B + C being equal to 100%.

5. Microparticles according to one of Claims 1 to 4, **characterized in that** they carry carboxyl functions f1 or hydroxyl functions f1 partially or completely modified to (meth)acrylate and/or vinyl and/or maleate and/or fumarate and/or maleimide and/or carboxylic salt functions f2.

6. Microparticles according to one of Claims 1 to 5, **characterized in that** they carry epoxy and/or hydroxyl functions f1 partially modified to (meth)acrylate functions f2.

7. Process for preparing microparticles as defined in one of Claims 1 to 6, **characterized in that** it comprises a step of free-radically polymerizing a composition of polymerizable compounds as defined in one of Claims 1 to 4 in dispersion in a nonaqueous medium which is a non-solvent for the polymer formed, without adding a polymer having a stabilizing effect on the microparticles formed, not before, not during and not after polymerization, it being possible for the said process to comprise, where appropriate, a further step of at least partial chemical modification of the functions f1 provided by component C as defined in one of Claims 1 to 3 and 4.

8. Composite or moulding or coating composition, **characterized in that** it comprises microparticles as defined in one of Claims 1 to 6.

9. Composition according to Claim 8, **characterized in that** it is crosslinkable and is composed solely or substantially of microparticles as defined in one of Claims 1 to 6 containing identical or different functions f1 and/or f2 which are crosslinkable between microparticles, and forming at least one crosslinking network.

10. Composition according to Claim 8, **characterized in that** it contains from 0.5% to 50% by weight of microparticles as defined in one of Claims 1 to 6.

11. Composition according to one of Claims 8 to 10, **characterized in that** the said composition is a coating composition.

**12.** Composition according to Claim 11, **characterized in that** the coating composition is a free-radically crosslinkable composition comprising monofunctional or polyfunctional acrylic or vinyl monomers and/or polyfunctional acrylic oligomers and microparticles defined according to one of Claims 1 to 6, carrying (meth)acrylate and/or maleate and/or fumarate and/or maleimide functions f2 obtained from the at least partial modification of starting functions f1.

**13.** Composition according to Claim 11 or 12, **characterized in that** the coating composition is a radiation-crosslinkable composition.

**14.** Composition according to Claim 12 or 13, **characterized in that** the crosslinkable composition comprises, as acrylic monomers, isobornyl (meth)acrylate and/or isodecyl (meth)acrylate, lauryl (meth)acrylate, 2-(2-ethoxyethoxy)ethyl (meth)acrylate, tridecyl (meth)acrylate, 2-phenoxyethyl (meth)acrylate, tetrahydrofurfuryl (meth)acrylate and/or, as acrylic oligomers, at least one acrylic oligomer selected from: polyether (meth)acrylates, polyester (meth)acrylates, polyurethane (meth)acrylates, polycaprolactone (meth)acrylates, epoxy (meth)acrylates and (meth)acrylated acrylic copolymers.

**15.** Coating composition as defined in one of Claims 11 to 13, **characterized in that** it is, or is intended to be, applied in the form of a coating to polar or non-polar substrates and comprises:

- 0.5% to 50% and preferably from 5% to 30% by weight of microparticles as defined in one of Claims 1 to 6, carrying (meth)acrylate and/or maleate and/or fumarate and/or maleimide functions f2,
- 50% to 99.5% by weight of at least one monomer selected from isobornyl (meth)acrylate and/or isodecyl (meth)acrylate or lauryl (meth)acrylate and tridecyl (meth)acrylate, and
- 0 to 5% by weight of $C_2$-$C_6$ alkylenediol di(meth)acrylate,

the percentages being selected such that the total sum of microparticles and monomers is equal to 100%.

**16.** Coating composition according to Claim 15, **characterized in that**:

- the polar substrates are: glass, steel, aluminium, silicon, polycarbonate, wood, glass fibres, carbon fibres, cellulose fibres, polyamide or polyester fibres;
- the non-polar substrates are: polyolefins and more particularly polyethylene, polypropylene and ethylene-propylene copolymers with or without special surface treatment, and low-surface-tension coatings.

**17.** Coating composition according to Claim 15 or 16, **characterized in that** it is applied to the substrate in the form of a thin film with a thickness of less than 100 microns, preferably less than 50 microns.

**18.** Composition according to Claim 11, **characterized in that** the said coating composition is a crosslinkable aqueous polymer dispersion composition comprising reactive water-soluble or water-dispersible microparticles which participate in crosslinking.

**19.** Coating composition according to one of Claims 8 to 11, **characterized in that** the said composition is a composition comprising epoxidized derivatives.

**20.** Coating composition according to Claim 19, **characterized in that** it is crosslinkable by UV radiation in the presence of a cationic photoinitiator and comprises microparticles carrying epoxy and/or hydroxyl functions f1.

**21.** Coating composition according to Claim 19, **characterized in that** it is crosslinkable by condensation reaction with at least one second reactive component selected from: polyamines and/or carboxylic anhydride- or carboxyl-functionalized polymers or copolymers.

**22.** Coating composition according to Claims 19 and 21, **characterized in that**, where the composition is crosslinkable by condensation reaction, it comprises microparticles carrying epoxy and/or hydroxyl and/or carboxyl and/or anhydride functions f1 and/or f2.

**23.** Coating composition according to one of Claims 8 to 11, **characterized in that** this composition comprises at least one reactive resin selected from: alkyds or unsaturated polyesters or saturated polyesters or polyamides or polyurethanes or polyureas and microparticles as defined in one of Claims 1 to 6, preferably containing functions f1 and/or f2 which are reactive with at least one function carried by this or these reactive resin(s).

24. Moulding composition according to Claims 8 to 10, **characterized in that** it comprises at least one reactive resin selected from: unsaturated polyesters, dicyclopentadiene resins, vinyl esters, epoxides and polyamines or polyurethanes and polyureas or polyurethane-ureas and microparticles as defined in one of Claims 1 to 6, preferably containing functions f1 and/or f2 which are reactive with at least one function carried by this or these reactive resin (s).

25. Moulding composition according to Claim 24, **characterized in that** it comprises organic and/or inorganic fillers and/or reinforcements selected from: glass fibres, glass mats, carbon fibres, cellulose fibres and polyamide or polyester fibres.